# EUROPEAN PATENT APPLICATION

(11) **EP 4 697 771 A1**
(43) Date of publication of application: **18.02.2026**
(21) Application number: 24806330.7
(22) Date of filing: 26.04.2024
(51) Int. Cl.: H04W 12/041

(54) **COMMUNICATION METHOD AND COMMUNICATION APPARATUS**

(30) Priority: 12.05.2023 CN 202310539755
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN); LIU, Wenfeng, Shenzhen, Guangdong 518129 (CN)
(74) Representative: Goddar, Heinz J.
(86) International application number: PCT/CN2024/090141
(87) International publication number: WO 2024/234974

(57) **Abstract**

A communication method is provided and includes: In an authentication procedure between a terminal device and a first gateway, the terminal device sends, to the first gateway, a message indicating whether the terminal device supports a first key hierarchy, so that the first gateway may accurately determine whether the terminal device supports the first key hierarchy and report whether the terminal device supports the first key hierarchy to a network side, the terminal device may derive, based on whether the terminal device supports the first key hierarchy, a first key used for security protection, and the network side may also derive the first key. A manner of deriving the first key when the terminal device supports the first key hierarchy is different from a manner of deriving the first key when the terminal device does not support the first key hierarchy. The terminal device may report whether the terminal device supports the first key hierarchy, so that the terminal device and the network side select a proper derivation manner to generate a needed key, to improve communication security.

## Description

### COMMUNICATION METHOD AND COMMUNICATION APPARATUS

This application claims priority to Chinese Patent Application No. 202310539755.8, filed with the China National Intellectual Property Administration on May 12, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

After an authenticable non-3rd generation partnership project (authenticable non-the 3rd generation partnership project, AUN3) device establishes a connection to a 5th generation (5th generation, 5G) residential gateway (5G residential gateway, 5G-RG), the AUN3 device may access a 5G core network (5G core network, 5GC) via the 5G-RG. To improve communication security, the AUN3 device and the 5G-RG may use a key to perform security protection on the established connection. The key used by the AUN3 device and the 5G-RG may be generated in different derivation manners based on whether the AUN3 device supports a 5G key hierarchy. Therefore, a correct key can be generated in a corresponding derivation manner only when it is determined whether the AUN3 device supports the 5G key hierarchy. Otherwise, secure communication cannot be performed between the AUN3 device and the 5G-RG.

### SUMMARY

Embodiments of this application provide a communication method, to improve communication security.

According to a first aspect, a communication method is provided. The method may be performed by a terminal device, or may be performed by a component (for example, a chip or a circuit) of the terminal device. This is not limited. The terminal device includes a terminal device or another device that needs to access a core network via a first gateway.

The communication method includes: receiving a first request message from the first gateway, where the first request message is used to request identity information of the terminal device, the terminal device accesses the core network through a connection between the terminal device and the first gateway, and the identity information is used by the core network to perform identity authentication on the terminal device; sending a first response message to the first gateway, where the first response message includes the identity information, and the first response message indicates whether the terminal device supports a first key hierarchy; receiving, from the first gateway, a message indicating that the identity authentication succeeds; and generating a first key based on whether the terminal device supports the first key hierarchy, where the first key is used to perform security protection on the connection between the terminal device and the first gateway.

Based on the foregoing solution, the terminal device may report, by using the first response message, whether the terminal device supports the first key hierarchy, so that a 5G-RG can learn, based on the first response message, whether the terminal device supports the first key hierarchy and report whether the terminal device supports the first key hierarchy to a network side. A corresponding manner of deriving a key when the terminal device supports the first key hierarchy is different from a corresponding manner of deriving a key when the terminal device does not support the first key hierarchy. When the network side learns whether the terminal device supports the first key hierarchy, a proper derivation manner may be selected to generate a needed key, and the terminal device may also derive, based on whether the terminal device supports the first key hierarchy, the first key used for security protection, to improve communication security.

With reference to the first aspect, in some implementations of the first aspect, the generating the first key based on whether the terminal device supports the first key hierarchy includes: when the terminal device supports the first key hierarchy, generating the first key in a first key derivation manner; and when the terminal device does not support the first key hierarchy, generating the first key in a second key derivation manner.

The first key derivation manner is different from the second key derivation manner. In this way, when it is determined whether the terminal device supports the first key hierarchy, the terminal device can generate a correct key in a corresponding derivation manner.

With reference to the first aspect, in some implementations of the first aspect, that the first response message indicates whether the terminal device supports the first key hierarchy includes: the identity information indicates whether the terminal device supports the first key hierarchy. In this way, whether the terminal device supports the first key hierarchy is directly indicated by using the identity information, so that information transmission efficiency can be improved.

With reference to the first aspect, in some implementations of the first aspect, that the identity information indicates whether the terminal device supports the first key hierarchy includes: when the identity information is a first identifier, the identity information indicates that the terminal device does not support the first key hierarchy; or when the identity information is a second identifier, the identity information indicates that the terminal device supports the first key hierarchy.

For example, the identity information is a subscription permanent identifier of the terminal device, and indicates that the terminal device does not support the first key hierarchy; and the identity information is a subscription concealed identifier of the terminal device, and indicates that the terminal device supports the first key hierarchy.

With reference to the first aspect, in some implementations of the first aspect, that the identity information indicates whether the terminal device supports the first key hierarchy includes: when the identity information is a first type of a first identifier, the identity information indicates that the terminal device does not support the first key hierarchy; or when the identity information is a second type of a first identifier, the identity information indicates that the terminal device supports the first key hierarchy.

For example, the identity information is a subscription concealed identifier of the terminal device, and when a type of the subscription concealed identifier is an international mobile subscriber identity, the identity information indicates that the terminal device does not support the first key hierarchy; or when a type of the subscription concealed identifier is a network access identifier, the identity information indicates that the terminal device supports the first key hierarchy.

With reference to the first aspect, in some implementations of the first aspect, that the identity information indicates whether the terminal device supports the first key hierarchy includes: the identity information includes a field indicating whether the terminal device supports the first key hierarchy.

For example, the identity information is a subscription permanent identifier of the terminal device, and a user name part or a realm part of the subscription permanent identifier indicates whether the terminal device supports the first key hierarchy.

For example, the identity information is a subscription concealed identifier of the terminal device, and the subscription concealed identifier includes a field indicating whether the terminal device supports the first key hierarchy.

With reference to the first aspect, in some implementations of the first aspect, the first response message further includes first indication information, and that the first response message indicates whether the terminal device supports the first key hierarchy includes: the first indication information indicates whether the terminal device supports the first key hierarchy.

For example, the first indication information includes at least one of the following: character string information, bit information, or a non-access stratum protocol data unit.

In this way, the explicit first indication information helps a message receiver quickly and accurately learn whether the terminal device supports the first key hierarchy. In addition, there may be a plurality of possible forms of the first indication information, thereby improving flexibility of the solution.

With reference to the first aspect, in some implementations of the first aspect, the first response message further includes second indication information, the second indication information indicates whether the terminal device supports a non-access stratum NAS protocol, and that the terminal device supports the NAS protocol indicates that the terminal device can generate and process a NAS message.

Based on the foregoing solution, a serving network name determined by the terminal device may be a value that can be determined by the terminal device, such as a preset fixed value, a home PLMN ID of the terminal device, or a PLMN ID of an access and mobility management network element that serves the first gateway, so that a two-way authentication procedure between the terminal device and the core network can be smoothly performed.

With reference to the first aspect, in some implementations of the first aspect, before the receiving, from the first gateway, the message indicating that the identity authentication succeeds, the method further includes: determining a serving network name, where the serving network name is used for the identity authentication, and the serving network name includes at least one of the following: a preset fixed value, a home public land mobile network identifier PLMN ID of the terminal device, or a PLMN ID of an access and mobility management network element that serves the first gateway.

Based on the foregoing solution, the serving network name determined by the terminal device may be a value that can be determined by the terminal device, such as the preset fixed value, the home PLMN ID of the terminal device, or the PLMN ID of the access and mobility management network element that serves the first gateway, so that the terminal device performs a two-way authentication procedure.

With reference to the first aspect, in some implementations of the first aspect, before the receiving the first request message from the first gateway, the method further includes: determining an access manner for accessing the first gateway, where the access manner includes trusted non-3rd generation partnership project 3GPP access or untrusted non-3GPP access.

With reference to the first aspect, in some implementations of the first aspect, the first gateway includes a 5th generation residential gateway 5G-RG, and the first key hierarchy includes a 5G key hierarchy.

According to a second aspect, a communication method is provided. The method may be performed by a first gateway, or may be performed by a component (for example, a chip or a circuit) of the first gateway. This is not limited. For ease of description, the following uses an example in which the method is performed by the first gateway for description.

The communication method includes: sending a first request message to a terminal device, where the first request message is used to request identity information of the terminal device, the terminal device accesses a core network through a connection between the terminal device and the first gateway, and the identity information is used by the core network to perform identity authentication on the terminal device; receiving a first response message from the terminal device, where the first response message includes the identity information, and the first response message indicates whether the terminal device supports a first key hierarchy; sending, to an access and mobility management network element, the identity information and indication information indicating whether the terminal device supports the first key hierarchy, where the access and mobility management network element is located in the core network; receiving, from the access and mobility management network element, a fifth key and a message indicating that the identity authentication succeeds, where the fifth key is generated based on whether the terminal device supports the first key hierarchy; sending, to the terminal device, the message indicating that the identity authentication succeeds; and generating a first key based on the fifth key, where the first key is used to perform security protection on the connection between the terminal device and the first gateway.

With reference to the second aspect, in some implementations of the second aspect, that the fifth key is generated based on whether the terminal device supports the first key hierarchy includes: when the terminal device supports the first key hierarchy, generating the fifth key in a first key derivation manner; and when the terminal device does not support the first key hierarchy, generating the fifth key in a second key derivation manner.

With reference to the second aspect, in some implementations of the second aspect, the sending, to the access and mobility management network element, the identity information and the indication information indicating whether the terminal device supports the first key hierarchy (briefly referred to as fourth indication information below, where the fourth indication information may be the identity information of the terminal device or the first indication information) includes: sending, to the access and mobility management network element by using a non-access stratum NAS registration request message, the identity information and the indication information indicating whether the terminal device supports the first key hierarchy, where the first response message includes the NAS registration request message, or the NAS registration request message is generated by the first gateway based on the first response message.

With reference to the second aspect, in some implementations of the second aspect, the method further includes: sending, by the first gateway to the access and mobility management network element, indication information indicating a device initiating a registration request to access the core network through a connection between the device and the first gateway (briefly referred to as third indication information below).

With reference to the second aspect, in some implementations of the second aspect, that the first response message indicates whether the terminal device supports the first key hierarchy includes: the identity information indicates whether the terminal device supports the first key hierarchy.

With reference to the second aspect, in some implementations of the second aspect, the first response message further includes first indication information, and that the first response message indicates whether the terminal device supports the first key hierarchy includes: the first indication information indicates whether the terminal device supports the first key hierarchy.

With reference to the second aspect, in some implementations of the second aspect, the NAS registration request message further includes fifth indication information, the fifth indication information indicates whether the terminal device supports a NAS protocol, and that the terminal device supports the NAS protocol indicates that the terminal device can generate and process a NAS message.

With reference to the second aspect, in some implementations of the second aspect, the first gateway includes a 5th generation residential gateway 5G-RG, and the first key hierarchy includes a 5G key hierarchy.

For technical effects of the method shown in the second aspect and the possible designs of the second aspect, refer to the technical effects in the first aspect and the possible designs of the first aspect.

According to a third aspect, a communication system is provided, including: A first gateway sends a first request message to a terminal device, where the first request message is used to request identity information of the terminal device, the terminal device accesses a core network through a connection between the terminal device and the first gateway, and the identity information is used by the core network to perform identity authentication on the terminal device. The terminal device sends a first response message to the first gateway, where the first response message includes the identity information, and the first response message indicates whether the terminal device supports a first key hierarchy. The first network element obtains a fifth key and a message indicating that the identity authentication succeeds, where the fifth key is generated based on whether the terminal device supports the first key hierarchy. The first gateway sends, to the terminal device, the message indicating that the identity authentication succeeds. The terminal device generates a first key based on whether the terminal device supports the first key hierarchy, where the first key is used to perform security protection on the connection between the terminal device and the first gateway. The first gateway generates the first key based on the fifth key.

With reference to the third aspect, in some implementations of the third aspect, the method further includes: An access and mobility management network element receives, from the first gateway, the identity information and indication information indicating whether the terminal device supports the first key hierarchy. The access and mobility management network element generates the fifth key based on whether the terminal device supports the first key hierarchy. The access and mobility management network sends the fifth key to the first gateway.

According to a fourth aspect, a communication system is provided. The communication system includes a terminal device and a first gateway.

The first gateway is configured to send a first request message to the terminal device, where the first request message is used to request identity information of the terminal device, the terminal device accesses a core network through a connection between the terminal device and the first gateway, and the identity information is used by the core network to perform identity authentication on the terminal device. The terminal device is configured to send a first response message to the first gateway, where the first response message includes the identity information, and the first response message indicates whether the terminal device supports a first key hierarchy. The first network element is further configured to obtain a fifth key and a message indicating that the identity authentication succeeds, where the fifth key is generated based on whether the terminal device supports the first key hierarchy. The first gateway is further configured to send, to the terminal device, the message indicating that the identity authentication succeeds. The terminal device is further configured to generate a first key based on whether the terminal device supports the first key hierarchy, where the first key is used to perform security protection on the connection between the terminal device and the first gateway. The first gateway is further configured to generate the first key based on the fifth key.

With reference to the fourth aspect, in some implementations of the fourth aspect, the system further includes an access and mobility management network element. The access and mobility management network element is configured to receive, from the first gateway, the identity information and indication information indicating whether the terminal device supports the first key hierarchy. The access and mobility management network element is further configured to generate the fifth key based on whether the terminal device supports the first key hierarchy. The access and mobility management network element is further configured to send the fifth key to the first gateway.

With reference to the fourth aspect, in some implementations of the fourth aspect, the authentication request message includes a serving network name, the serving network name is used for the identity authentication, and the serving network name includes at least one of the following: a preset fixed value, a home public land mobile network identifier PLMN ID of the terminal device, or a PLMN ID of an access and mobility management network element that serves the first gateway.

With reference to the fourth aspect, in some implementations of the fourth aspect, the NAS registration request message further includes fifth indication information, the fifth indication information indicates whether the terminal device supports a NAS protocol, and that the terminal device supports the NAS protocol indicates that the terminal device can generate and process a NAS message.

With reference to the fourth aspect, in some implementations of the fourth aspect, when the fifth indication information indicates that the terminal device supports the NAS protocol, the access and mobility management network element is further configured to generate a NAS key based on the fifth key and an identifier of the terminal device; and the access and mobility management network element is further configured to perform a NAS SMC procedure with the terminal device based on the NAS key.

With reference to the fourth aspect, in some implementations of the fourth aspect, the authentication request message further includes sixth indication information, and the sixth indication information indicates that a to-be-authenticated device is the terminal device that accesses the core network through the connection between the terminal device and the first gateway.

With reference to the fourth aspect, in some implementations of the fourth aspect, the authentication network element is further configured to send an obtaining request message to a data management network element, where the obtaining request message is used to request to obtain an authentication vector needed for authentication, and the obtaining request message includes an identifier of the terminal device. The authentication network element is further configured to receive an obtaining response message from the data management network element, where the obtaining response message includes information about the authentication vector.

With reference to the fourth aspect, in some implementations of the fourth aspect, the first gateway includes a 5th generation residential gateway 5G-RG, and the first key hierarchy includes a 5G key hierarchy.

For technical effects of the method shown in the fourth aspect and the possible designs of the fourth aspect, refer to the technical effects in the first aspect and the possible designs of the first aspect.

According to a fifth aspect, a communication method is provided. The method may be performed by a data management network element, or may be performed by a component (for example, a chip or a circuit) of the data management network element. This is not limited. For ease of description, the following uses an example in which the method is performed by the data management network element for description.

The communication method includes: The data management network element receives an obtaining request message from an authentication network element, where the obtaining request message is used to request to obtain an authentication vector needed for authentication, and the obtaining request message includes an identifier of an authenticable non-3rd generation partnership project terminal device. The data management network element sends an obtaining response message to the authentication network element, where the obtaining response message includes information about the authentication vector and seventh indication information, the seventh indication information indicates whether the terminal device supports a first key hierarchy, and the information about the authentication vector and the seventh indication information are obtained based on the identifier of the terminal device.

Based on the foregoing solution, the data management network element may provide indication information indicating whether the terminal device supports the first key hierarchy, so that a network side can learn whether the terminal device supports the first key hierarchy, and select a proper derivation manner to generate a needed key, to improve communication security.

With reference to the fifth aspect, in some implementations of the fifth aspect, the method further includes: The data management network element selects an authentication method based on the identifier of the terminal device, and determines the authentication vector corresponding to the authentication method.

With reference to the fifth aspect, in some implementations of the fifth aspect, the method further includes: The data management network element determines subscription data of the terminal device based on the identifier of the terminal device, where the subscription data of the terminal device includes the seventh indication information; or the data management network element determines subscription data of the terminal device based on the identifier of the terminal device, and determines, based on the subscription data of the terminal device, whether the terminal device supports the first key hierarchy.

Based on the foregoing solution, the data management network element may determine, in different manners, whether the terminal device supports the first key hierarchy, thereby improving flexibility of the solution.

With reference to the fifth aspect, in some implementations of the fifth aspect, the obtaining response message further includes eighth indication information, where the eighth indication information indicates whether the terminal device supports a non-access stratum NAS protocol, and that the terminal device supports the NAS protocol indicates that the terminal device can generate and process a NAS message.

Based on the foregoing solution, the data management network element may indicate, by using the eighth indication information, whether the terminal device supports the NAS protocol, so that the network side can learn, based on the eighth indication information, whether the terminal device supports the NAS protocol, and subsequently, the mobility management network element on the network side determines whether to perform a NAS SMC procedure with the terminal device.

According to a sixth aspect, a communication method is provided. The method may be performed by an access and mobility management network element, or may be performed by a component (for example, a chip or a circuit) of the access and mobility management network element. This is not limited. For ease of description, the following uses an example in which the method is performed by the access and mobility management network element for description.

The communication method includes: The access and mobility management network element receives a NAS registration request message from a first gateway, where the NAS registration request message includes third indication information, and the third indication information indicates that a device initiating a registration request is an authenticable non-3rd generation partnership project terminal device. The access and mobility management network element determines, based on the third indication information, that the registration request is initiated by the terminal device. The access and mobility management network element sends an authentication request message to an authentication network element, where the authentication request message is used to request the authentication network element to perform authentication on the terminal device. The access and mobility management network element receives an authentication response message from the authentication network element, where the authentication response message includes a third key and ninth indication information, and the ninth indication information indicates whether the terminal device supports a first key hierarchy. The access and mobility management network element generates a fifth key based on the third key and whether the terminal device supports the first key hierarchy. The access and mobility management network element sends the fifth key to the first gateway, where a corresponding manner of generating the fifth key when the terminal device supports the first key hierarchy is different from a corresponding manner of generating the fifth key when the terminal device does not support the first key hierarchy.

With reference to the sixth aspect, in some implementations of the sixth aspect, the authentication request message further includes a serving network name, the serving network name is used for the identity authentication, and the serving network name includes at least one of the following: a preset fixed value, a home public land mobile network identifier PLMN ID of the terminal device, or a PLMN ID of an access and mobility management network element that serves the first gateway.

With reference to the sixth aspect, in some implementations of the sixth aspect, the authentication request message further includes sixth indication information, and the sixth indication information indicates that a to-be-authenticated device is the terminal device that accesses the core network through the connection between the terminal device and the first gateway.

With reference to the sixth aspect, in some implementations of the sixth aspect, the first gateway includes a 5th generation residential gateway 5G-RG, and the first key hierarchy includes a 5G key hierarchy.

With reference to the sixth aspect, in some implementations of the sixth aspect, the authentication response message further includes tenth indication information, the tenth indication information indicates whether the terminal device supports a NAS protocol, and that the terminal device supports the NAS protocol indicates that the terminal device can generate and process a NAS message.

With reference to the sixth aspect, in some implementations of the sixth aspect, when the tenth indication information indicates that the terminal device supports the NAS protocol, the method further includes: The access and mobility management network element generates a NAS key based on the fifth key and an identifier of the terminal device. The access and mobility management network element performs a NAS SMC procedure with the terminal device based on the NAS key.

For technical effects of the method shown in the sixth aspect and the possible designs of the sixth aspect, refer to the technical effects in the fourth aspect and the possible designs of the fourth aspect.

According to a seventh aspect, a communication method is provided. The method may be performed by an authentication network element, or may be performed by a component (for example, a chip or a circuit) of the authentication network element. This is not limited. For ease of description, the following uses an example in which the method is performed by the authentication network element for description.

The communication method includes: The authentication network element receives an authentication request message from an access and mobility management network element, where the authentication request message is used to request the authentication network element to perform authentication on an authenticable non-3rd generation partnership project terminal device, and the authentication request message includes an identifier of the terminal device. The authentication network element sends an obtaining request message to a data management network element, where the obtaining request message is used to request to obtain an authentication vector needed for the authentication, and the obtaining request message includes the identifier of the terminal device. The authentication network element receives an obtaining response message from the data management network element, where the obtaining response message includes information about the authentication vector and seventh indication information, and the seventh indication information indicates whether the terminal device supports a first key hierarchy. The authentication network element generates a third key based on the identifier of the terminal device and whether the terminal device supports the first key hierarchy. The authentication network element sends an authentication response message to the access and mobility management network element, where the authentication response message includes the third key and ninth indication information, and the ninth indication information indicates whether the terminal device supports the first key hierarchy; and a corresponding manner of generating the third key when the terminal device supports the first key hierarchy is different from a corresponding manner of generating the third key when the terminal device does not support the first key hierarchy.

With reference to the seventh aspect, in some implementations of the seventh aspect, the method further includes: The authentication network element performs two-way authentication with the terminal device based on the authentication vector.

With reference to the seventh aspect, in some implementations of the seventh aspect, the authentication request message further includes sixth indication information, and the sixth indication information indicates that a to-be-authenticated device is the terminal device that accesses the core network through the connection between the terminal device and the first gateway.

With reference to the seventh aspect, in some implementations of the seventh aspect, the obtaining response message further includes eighth indication information, the eighth indication information indicates whether the terminal device supports a non-access stratum NAS protocol, and that the terminal device supports the NAS protocol indicates that the terminal device can generate and process a NAS message.

With reference to the seventh aspect, in some implementations of the seventh aspect, the authentication response message further includes tenth indication information, and the tenth indication information indicates whether the terminal device supports the NAS protocol.

According to an eighth aspect, a communication system is provided, including a data management network element, an access and mobility management network element, and an authentication network element, where the data management network element is configured to perform the method shown in the fifth aspect, the access and mobility management network element performs the method shown in the sixth aspect, and the authentication network element performs the method shown in the seventh aspect.

According to a ninth aspect, a communication apparatus is provided. The apparatus includes a transceiver unit and a processing unit. The transceiver unit is configured to perform steps of receiving and sending information in the methods provided in the foregoing aspects, and the processing unit is configured to perform processing steps in the methods provided in the foregoing aspects.

According to a tenth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to an eleventh aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing inputted information, the transceiver obtains/receives the foregoing information, and inputs the information into the processor. Further, after the transceiver receives the foregoing information, other processing may need to be performed on the foregoing information before the foregoing information is input into the processor.

Based on the foregoing principle, for example, receiving a request message mentioned in the foregoing methods may be understood as receiving inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a twelfth aspect, a computer-readable storage medium is provided. The computer-readable medium stores program code executed by a device, and the program code is used to perform the methods provided in the foregoing aspects.

According to a thirteenth aspect, a computer program product including instructions is provided. When the computer program product runs on a computer, the computer is enabled to perform the methods provided in the foregoing aspects.

According to a fourteenth aspect, a chip is provided. The chip includes a processor and a communication interface, and the processor reads, through the communication interface, instructions stored in a memory, to perform the methods provided in the foregoing aspects.

Optionally, in an implementation, the chip may further include the memory. The memory stores the instructions. The processor is configured to execute the instructions stored in the memory. When the instructions are executed, the processor is configured to perform the methods provided in the foregoing aspects.

### BRIEF DESCRIPTION OF DRAWINGS

FIG. 1 is a diagram of a network architecture 100 according to this application;
(a) and (b) in FIG. 2 are diagrams of non-3GPP access according to an embodiment of this application;
FIG. 3 is a diagram of a registration procedure performed by a terminal device through untrusted non-3GPP according to an embodiment of this application;
FIG. 4 is a diagram of a registration procedure performed by a terminal device through trusted non-3GPP according to an embodiment of this application;
FIG. 5 is a diagram in which an AUN3 device that does not support a 5G key hierarchy accesses a 5GC according to an embodiment of this application;
FIG. 6 is a diagram in which an AUN3 device that supports a 5G key hierarchy accesses a 5GC according to an embodiment of this application;
FIG. 7 is a diagram of a non-5G key hierarchy according to an embodiment of this application;
FIG. 8 is a diagram of a 5G key hierarchy according to an embodiment of this application;
FIG. 9 is a schematic flowchart of a communication method according to this application;
FIG. 10 is a schematic flowchart of another communication method according to this application;
FIG. 11 is a block diagram of a communication apparatus 10 according to an embodiment of this application;
FIG. 12 is a diagram of another communication apparatus 20 according to an embodiment of this application; and
FIG. 13 is a diagram of a chip system 30 according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system.

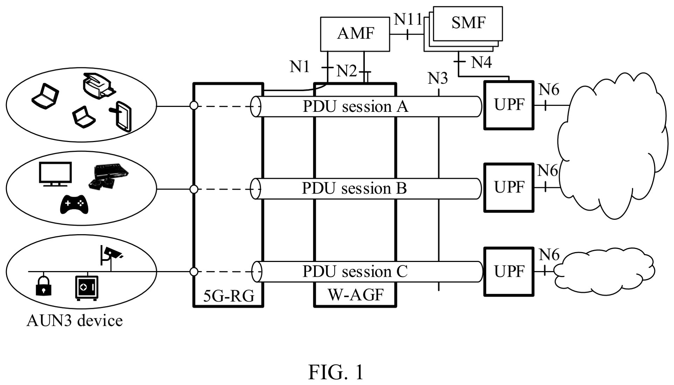

For ease of understanding a communication method provided below, a communication scenario to which the communication method provided in embodiments of this application is applicable is first described with reference to FIG. 1.

FIG. 1 is a diagram of a network architecture 100 according to this application. The following devices (or in other words, gateways, nodes, network elements, and the like) are included: an AUN3 devices, a 5G-RG, a wireless access gateway function (wireline access gateway function, W-AGF), and a core network (core network, CN).

The core network includes but is not limited to the following network functions (also referred to as devices, gateways, network elements, network function network elements, or nodes): an access and mobility management function (access and mobility management function, AMF), a session management function (session management function, SMF), a user plane function (user plane function, UPF), a unified data management function (unified data management, UDM), an authentication server function (authentication server function, AUSF), and the like. The UDM and the AUSF are not shown in the figure. The following briefly describes functions of the devices.
1. AUN3 device: As shown in FIG. 1, devices that access a core network via a 5G-RG are collectively referred to as AUN3 devices. If the AUN3 device needs to access the core network, the AUN3 device is first connected to the 5G-RG, and then accesses the core network via the 5G-RG.

The AUN3 device in embodiments of this application is a device having a wireless transceiver function, and may indirectly use one or more CN devices for communication via the 5G-RG (may also be referred to as an access device).

For example, the AUN3 device may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

2. 5G-RG: is a fixed network device and is also a terminal device. The 5G-RG is a residential gateway (Residential Gateway, RG) that can be registered with the core network. From a perspective of the core network, the 5G-RG plays a role of a terminal device. The 5G-RG communicates with the core network through a communication interface (for example, an N1 interface shown in FIG. 1).

For example, 5G-RG may also be referred to as an access terminal, a terminal, a subscriber unit, a subscriber station, a mobile station, a remote station, a remote terminal, a mobile device, a user terminal, a user agent, a user apparatus, or the like. The 5G-RG may be deployed on land, including an indoor or outdoor device, or a handheld or vehicle-mounted device, may be deployed on a water surface (for example, on a ship), or may be deployed in the air (for example, on an airplane, a balloon, and a satellite). The 5G-RG may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the 5G-RG may be a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network and a future network, a terminal in a future evolved 6G network, or the like.

3. W-AGF: may also be referred to as access gateway function, AGF. There is a connection between the 5G-RG and the W-AGF, and the connection is used to transmit a control plane packet and a user plane packet that are exchanged between the AUN3 device and the core network. The control plane packet may also be referred to as a non-access stratum (non-access stratum, NAS) message.

For example, after receiving an uplink user plane packet from the AUN3 device via the 5G-RG, the W-AGF identifies a protocol data unit (protocol data unit, PDU) session and a quality of service (quality of service, QoS) flow that correspond to the uplink user plane packet, and sends the uplink user plane packet to a UPF through an N3 interface. The PDU session and the QoS flow that correspond to the uplink user plane packet are identified to determine a processing rule corresponding to the packet, so as to process a downlink user plane packet.

For another example, after receiving a downlink user plane packet from the core network, the W-AGF may add an identifier to the downlink user plane packet, so that the AUN3 device can identify a PDU session and a QoS flow to which the downlink user plane packet belongs, and then process the downlink user plane packet based on a processing rule that corresponds to the PDU session and the QoS flow.

4. AMF: is responsible for access control and mobility management for a terminal device (for example, the foregoing 5G-RG) to access an operator network, for example, mobility status management, allocation of a temporary user identity, and authentication and authorization of a user. For example, in embodiments of this application, the AMF may determine, based on information sent by the 5G-RG, whether the AUN3 device initiating a registration request supports a 5G key hierarchy, and can generate a correct key in a corresponding derivation manner when determining whether the AUN3 device supports the 5G key hierarchy.

5. SMF: is responsible for managing a PDU session of the 5G-RG, for example, establishing, maintaining, and deleting a PDU session. The PDU session is a channel used to transmit a PDU, and the 5G-RG and a data network transmit a PDU to each other through the PDU session. The SMF includes session-related functions, such as session management (such as session establishment, modification, and release), service and session continuity (service and session continuity, SSC) mode selection, and roaming. In the scenario shown in FIG. 1, the PDU session established between the 5G-RG and the SMF may be used to transfer data of the AUN3 device.

6. UPF: The UPF includes user plane-related functions, such as data packet routing and transmission, data packet detection, traffic usage reporting, QoS handling, lawful interception, uplink data packet detection, and downlink data packet storage.

7. UDM: is responsible for storage of a subscription permanent identifier (subscription permanent identifier, SUPI) of a subscriber in the operator network, a generic public subscription identifier (generic public subscription identifier, GPSI) of the subscriber, a credential (credential), and other information. The SUPI is first ciphered during transmission, and a ciphered SUPI is referred to as a subscription concealed identifier (subscription concealed identifier, SUCI). The information stored by the UDM may be used for authentication and authorization of the terminal device for access to the operator network. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that, for ease of description, information such as the permanent identifier, the credential, a security context, authentication data (cookie), and a token related to verification/authentication and authorization is not limited or distinguished in embodiments of this application.

8. AUSF: is usually used for primary authentication, that is, authentication between a terminal device (subscriber) and an operator network. After receiving an authentication request initiated by a subscriber, the AUSF may perform authentication and/or authorization on the subscriber by using authentication information and/or authorization information stored in the UDM, or generate authentication and/or authorization information of the subscriber by using the UDM. The AUSF may feed back the authentication information and/or the authorization information to the subscriber.

It may be understood that the foregoing network elements or functions may be physical entities in a hardware device, software instances running on dedicated hardware, or virtualized functions instantiated on a sharing platform (for example, a cloud platform). In short, a network function (network function, NF) may be implemented by hardware or software.

In FIG. 1, N1, N2, N3, N4, and N6 are interface sequence numbers. For example, for a meaning of the interface sequence number, refer to a meaning defined in the 3rd generation partnership project (the 3rd generation partnership project, 3GPP) standard protocol. The meaning of the interface sequence number is not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are also merely examples, and do not constitute any limitation on functions of the messages.

For ease of description, in embodiments of this application, a network function (such as the AMF, the SMF, or the UPF) is collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the AMF, the SMF, and the UPF shown in the figure may be understood as network elements configured to implement different functions in the core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, some or all of the foregoing network elements may still use terms in 5G, or may use other names.

It should be further understood that FIG. 1 merely provides an example of a scenario to which the communication method provided in this application is applicable, and does not constitute any limitation on the scenario to which the communication method provided in this application can be applied. Alternatively, in this application, that an authenticable non-3GPP device accesses a network may be that an authenticable non-3GPP device accesses the network via another type of RG (for example, a 6G-RG). Examples are not described one by one herein.

For ease of understanding of embodiments of this application, some basic concepts in this application are briefly described.
1. Non-3GPP access: means that a technology other than a 3GPP access technology is used to access a network, for example, wireless fidelity (Wireless Fidelity, Wi-Fi), Bluetooth, or ZigBee (ZigBee). 3GPP access means that a 3GPP access technology is used to access a mobile network. The 3GPP access technology is a technology such as 5G or LTE. Generally, it may be understood that, in the 3GPP access technology, access is provided by a type of base station such as a next generation node base station (next generation node base station, gNB) in a 5G system or an evolved NodeB (evolved NodeB, eNB) in long term evolution (long term evolution, LTE).
2. Non-3GPP access type: includes an untrusted non-3GPP access technology (untrusted non-3GPP access) and a trusted non-3GPP access technology (trusted non-3GPP access), where the untrusted non-3GPP access technology may be that a terminal device accesses a core network through a wireless access node purchased by an individual; and the trusted non-3GPP access technology may be that a terminal device accesses a core network through a wireless access node deployed by an operator, or a wireline access technology (wireline access).
3. Non-3GPP access network device: includes but is not limited to a non-3GPP interworking function (non-3GPP interworking function, N31WF), a trusted non-3GPP gateway function (trusted non-3GPP gateway function, TNGF), a trusted non-3GPP access point (trusted non-3GPP access point, TNAP), a trusted wireless local area network interworking function (trusted wireless local area network interworking function, TWIF), or a W-AGF.

The N3IWF may be configured to allow interconnection and interworking between the terminal device and the 3GPP core network by using a non-3GPP technology. The N3IWF supports communication with a mobility management device through an N2 interface, and supports communication with a user plane device through an N3 interface.

The TNAP may be configured to send an authentication, authorization, and accounting (authentication, authorization, and accounting, AAA) message, for example, encapsulate an identity authentication protocol (extensible authentication protocol, EAP) data packet into the AAA message, and interact with the TNGF to forward an EAP message.

The TNGF may be configured to support the N2 interface and the N3 interface, and may implement AMF selection and processing of N2 signaling with the SMF (relayed by the AMF), to support functions such as session and QoS, and transparent relaying of a PDU between a terminal device and a user plane device.

4. Non-3GPP access procedure: If the non-3GPP access technology is an untrusted non-3GPP access technology, a non-3GPP access network device corresponding to the untrusted non-3GPP access technology may include the N3IWF, a network topology structure is equivalent to a radio access network (radio access network, RAN) in a 3GPP access network, and the N2 interface and the N3 interface may be supported.

If the non-3GPP access technology is a trusted non-3GPP access technology, a non-3GPP access network device corresponding to the trusted non-3GPP access technology may include the TNGF, a network topology structure is equivalent to a RAN in a 3GPP access network, and the N2 interface and the N3 interface may be supported.

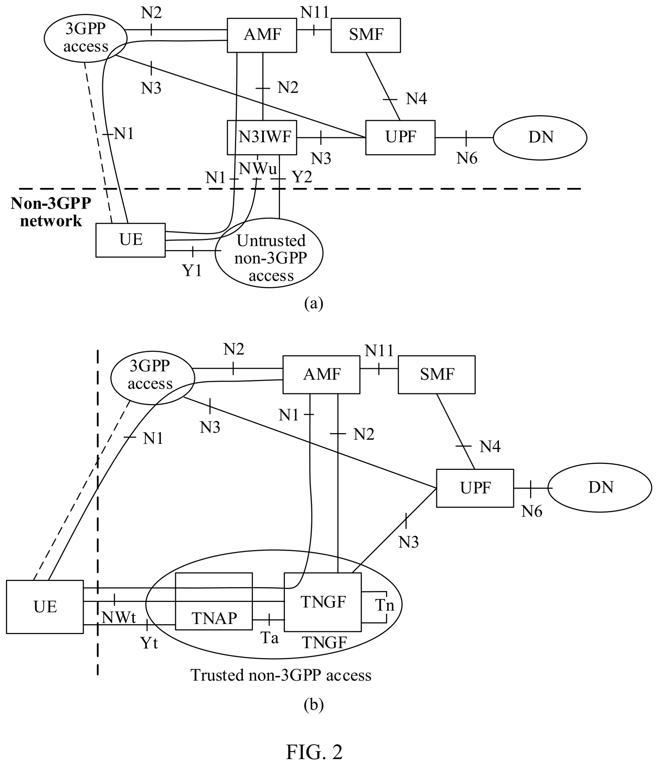

For ease of understanding, the following separately describes an untrusted non-3GPP access procedure and a trusted non-3GPP procedure with reference to (a) and (b) in FIG. 2.

(a) in FIG. 2 is an untrusted non-3GPP access architecture. A terminal device may access an untrusted non-3GPP device through a communication interface (for example, a Y1 interface shown in (a) in FIG. 2). The untrusted non-3GPP device accesses a gateway N3IWF through a communication interface (for example, a Y2 interface shown in (a) in FIG. 2). The N3IWF is connected to an AMF through a communication interface (for example, an N2 interface shown in (a) in FIG. 2).

(b) in FIG. 2 is a trusted non-3GPP access architecture. A terminal device may access a trusted non-3GPP access point through a communication interface (for example, a Yt interface shown in (b) in FIG. 2). The trusted non-3GPP access point accesses a trusted non-3GPP gateway function through a communication interface (for example, a Ta interface shown in (b) in FIG. 2). The trusted non-3GPP gateway function is connected to an AMF through a communication interface (for example, an N2 interface shown in (b) in FIG. 2).

In addition, the terminal device may alternatively be connected to the AMF by using a 3GPP access technology. In other words, the terminal device may access a same AMF or different AMFs by using both the 3GPP access technology and the non-3GPP access technology. Alternatively, the terminal device may access the AMF by using only the 3GPP access technology, or access the AMF by using only the non-3GPP access technology.

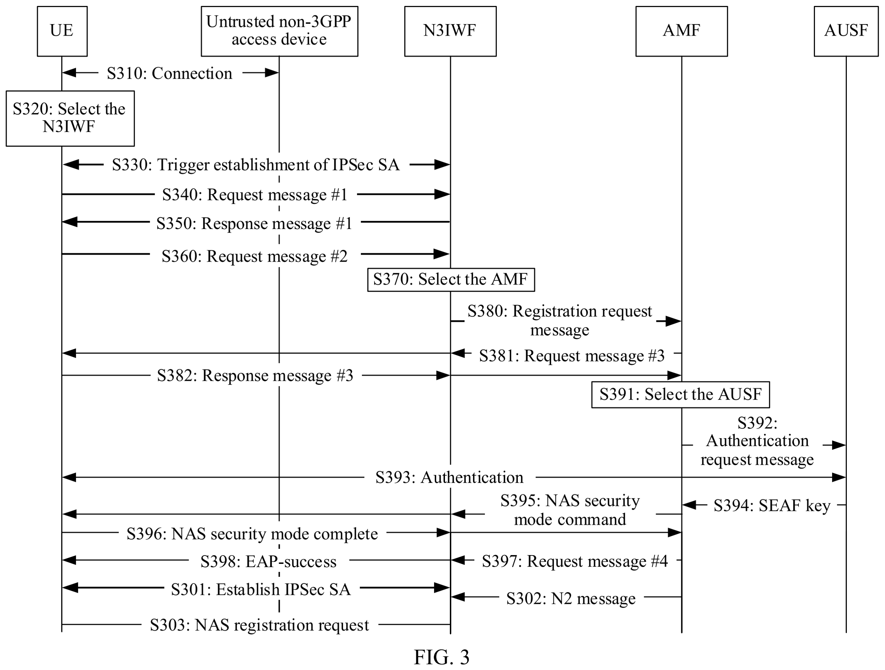

5. Registration procedure of a terminal device through untrusted non-3GPP: As shown in FIG. 3, the registration procedure of the terminal device through untrusted non-3GPP includes the following steps.

S310: UE is connected to an untrusted non-3GPP access device (untrusted non-3GPP access network).

Specifically, the UE is connected to the untrusted non-3GPP access device and is allocated with an IP address.

S320: The UE selects an N3IWF.

Specifically, the UE selects the N3IWF, and obtains address information of the N3IWF.

S330: The UE triggers establishment of internet protocol security (Internet Protocol Security, IPsec) security association (IPsec Security Association, IPSec SA) with the N3IWF.

Specifically, the UE triggers establishment of the IPSec SA with the N3IWF by initiating internet key exchange protocol (Internet Key Exchange, IKE) initial exchange.

S340: The UE sends a request message #1 to the N3IWF.

The request message #1 does not include an authorized (authorized, AUTH) payload (payload). It may be understood as that the request message #1 is used for identity authentication protocol (extensible authentication protocol, EAP) signaling interaction. Optionally, the request message #1 is referred to as an IKE_AUTH request message.

S350: The N3IWF sends a response message #1 to the UE.

The response message #1 includes an EAP-request (EAP-Request) /5G start (5G-Start) data packet. The EAP-request/5G-start data packet is used to notify the UE about initiation of an EAP-5G session. For example, the response message #1 is used to notify the UE to start to send a NAS message (the NAS message is encapsulated in an EAP-5G data packet).

Optionally, the response message #1 is referred to as an IKE_AUTH response message.

S360: The UE sends a request message #2 to the N3IWF.

The request message #2 includes an EAP-response (EAP-Response)/5G-NAS data packet, the EAP-response/5G-NAS data packet includes an access network (access network, AN) parameter and a non-access stratum protocol data unit (Non-Access Stratum-Protocol Data Unit, NAS-PDU), and the NAS PDU carries a registration request message. The AN parameter includes parameter information used by the N3IWF to select an AMF, for example, a globally unique AMF identifier (Globally Unique AMF Identifier, GUAMI), a selected public land mobile network (Public Land Mobile Network, PLMN) identifier (identifier, ID) (or a PLMN ID and an NID), and the like.

Optionally, the request message #2 is referred to as an IKE_AUTH request message.

If the UE has accessed a 3GPP system before, for example, by using a 3GPP technology, the UE includes a 5G globally unique temporary identifier (5G Globally Unique Temporary Identifier, 5G-GUTI) in the registration request message.

If the UE has not accessed a 3GPP system before, the registration request message may carry a subscription concealed identifier (Subscription concealed identifier, SUCI).

S370: The N3IWF performs AMF selection.

S380: The N3IWF sends a registration request message to the AMF.

In a possible implementation, when the registration request message does not carry the SUCI, or the AMF fails to verify integrity protection of the registration request message, the AMF may obtain the SUCI of the UE by sending a request message #3 to the UE. In this implementation, the method procedure shown in FIG. 3 further includes the following steps.

S381: The AMF sends the request message #3 to the UE via the N3IWF. The request message #3 is used to request to obtain the SUCI of the UE.

Optionally, the request message #3 is referred to as a NAS identity request. For example, the AMF sends the NAS identity request to the N3IWF through an N2 communication interface, and the N3IWF encapsulates the NAS identity request into an EAP/5G-NAS data packet and sends the EAP/5G-NAS data packet to the UE. The data packet sent by the N3IWF to the UE may be referred to as an IKE_AUTH request message.

S382: The UE sends a response message #3 to the AMF via the N3IWF. The response message #3 carries the SUCI of the UE.

Optionally, the response message #3 is referred to as a NAS identity response. For example, the UE encapsulates the NAS identity response into an EAP/5G-NAS data packet and sends the EAP/5G-NAS data packet to the N3IWF, and the N3IWF sends the NAS identity response to the AMF through the N2 communication interface. The data packet sent by the UE to the N3IWF may be referred to as an IKE_AUTH response message.

In another possible implementation, when the registration request message carries the SUCI, or the AMF successfully verifies integrity protection of the registration request message, or the AMF obtains the SUCI from the response message #3, the AMF may initiate a procedure of performing authentication on the UE. In this implementation, the method procedure shown in FIG. 3 further includes the following steps.

S391: The AMF selects an authentication server function (Authentication Server Function, AUSF) network element.

S392: The AMF sends an authentication request message to the AUSF. Optionally, the authentication request message is referred to as an AAA key request message (AAA Key Request). The authentication request message carries the SUCI or the SUPI.

S393: The AUSF performs authentication on the UE. Specifically, a procedure in which the AUSF performs authentication on the UE is not described in detail in this embodiment. For details, refer to descriptions in a related technology in step 7 in section 7.2.1 in the current 3GPP standard TS33.501.

S394: The AUSF sends a security anchor function (Safety anchor function, SEAF) key to the AMF.

After the authentication is completed, the AUSF sends the SEAF key to the AMF, for example, an AAA key response message (AAA Key response), where the AAA key response message carries the EAF key.

The AMF may derive a NAS security key and a security key of the N3IWF by using the SEAF key. The N3IWF key is used by the UE and the N3IWF to establish the IPSec SA.

S395: The AMF sends a NAS security mode command (Security Mode Command) to the UE via the N3IWF. NAS security is activated. The NAS security mode command includes an EAP-success, indicating that EAP-AKA' authentication performed by a core network succeeds.

S396: The UE sends NAS security mode complete (Security Mode Complete) to the AMF via the N3IWF.

Specifically, the N3IWF forwards, to the UE, the NAS security mode command sent by the AMF, and sends, to the AMF, the NAS security mode complete message sent by the UE.

S397: The AMF sends a request message #4 to the N3IWF. The request message #4 includes an N31WF key.

Optionally, the request message #4 may be referred to as an NG interface protocol (Protocol for NG Interface, NGAP) initial context setup request (NGAP Initial Context Setup Request) message.

Specifically, after the AMF receives the NAS security mode complete message from the UE, the AMF sends the NGAP initial context setup request to the N3IWF, where the NGAP initial context setup request includes the N3IWF key.

S398: The N3IWF sends the EAP-success (Success) to the UE. After the UE receives the EAP-success, it indicates that the EAP-5G session is completed, and no EAP-5G data packet is exchanged subsequently.

In still another possible implementation, when the registration request message carries the 5G-GUTI, and the AMF successfully verifies integrity protection of the registration request message, the AMF may determine not to initiate authentication. In this case, steps S381, S382, and S391 to S398 may not be performed.

Further, the UE and the N3IWF establish the IPSec SA by using the foregoing obtained N3IWF key. The method procedure shown in FIG. 3 further includes the following steps.

S301: Establish the IPSec SA between the UE and the N3IWF by using the N3IWF key.

The IPSec SA is referred to as signaling IPSec SA (signaling IPSec SA). After the signaling IPSec SA is established, the N3IWF notifies the AMF by using an NGAP initial context setup response that a context of the UE has been created. In this case, the signaling IPSec SA is configured to be run in a tunnel mode, and the N3IWF allocates an "inner" IP address and NAS_IP_ADDRESS to the UE. Transmission of all subsequent NAS messages is performed through the signaling IPSec SA. For an uplink NAS message sent by the UE to the AMF, a source address is the "inner" IP address of the UE, and a destination address is NAS_IP_ADDRESS. For a downlink NAS message sent by the AMF to the UE, a source address is NAS_IP_ADDRESS, and a destination address is the "inner" IP address of the UE.

S302: The AMF sends an N2 message to the N3IWF. The N2 message includes a NAS registration accept message (NAS Registration Accept) sent to the UE. Subsequently, when the AMF registers with a UDM, the AMF needs to provide the UDM with an access type of non-3GPP access.

S303: The N3IWF sends a NAS registration request to the UE through the signaling IPSec SA.

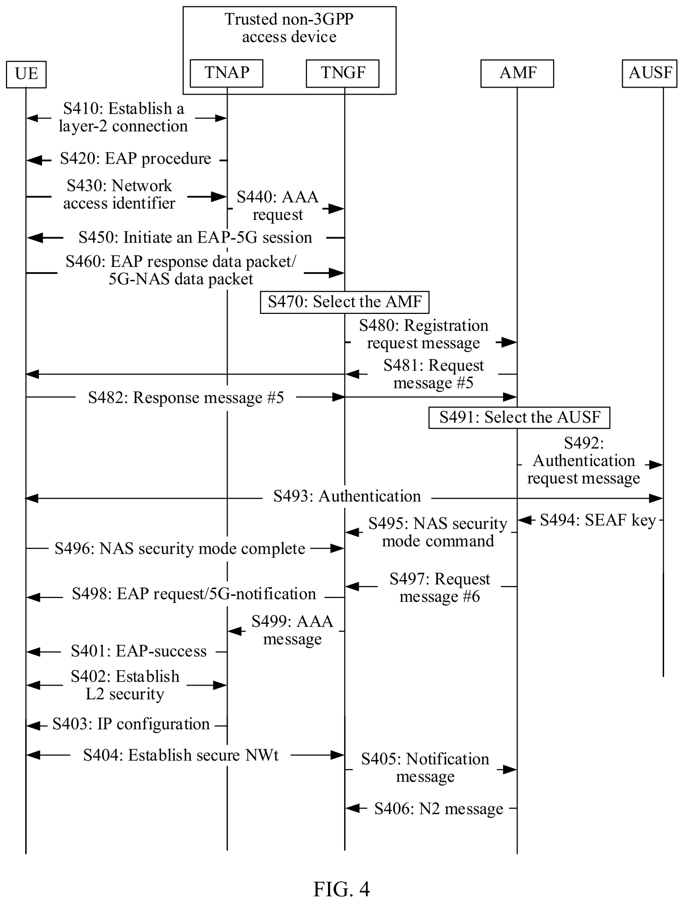

6. Registration procedure of a terminal device through trusted non-3GPP: As shown in FIG. 4, the registration procedure of the terminal device through trusted non-3GPP includes the following steps.

S410: UE selects a PLMN and a trusted non-3GPP access network (Trusted Non-3GPP Access Network, TNAN) connected to the PLMN. The UE establishes a layer-2 (Layer-2) connection to a trusted non-3GPP access point (Trusted Non-3GPP Access Point, TNAP).

S420: The TNAP initiates an EAP procedure. An EAP message is encapsulated into an L2 data packet, for example, encapsulated into an IEEE 802.3 or 802.1x or point-to-point communication protocol (Point-to-Point Protocol, PPP) data packet.

Optionally, the TNAP sends an EAP request or identity (EAP-Req/Identity) message to the UE, to request to obtain identification information of the UE.

S430: The UE sends a network access identifier (Network Access Identifier, NAI) to the TNAP.

The NAI indicates that 5G connectivity (5G connectivity) to a specific PLMN is requested.

Optionally, the UE sends an EAP response or identity (EAP-Res/Identity) message to the TNAP, where the EAP-res/identity message includes the NAI,

for example, NAI="<any_username>@nai.5ge. mnc<MNC>.mcc<MCC>.3gppnetwork.org". The NAI triggers the TANP to send an AAA request (AAA request) to a TNGF.

S440: The TANP sends the AAA request to the TNGF. An EAP data packet between the TNAP and the TNGF is encapsulated through the AAA message. The AAA request further includes a TNAP identifier, which may be used as user location information (User Location Information, ULI).

S450: The TNGF initiates an EAP-5G session. Specifically, the TNGF sends an EAP request/5G-start data packet to the UE. The EAP-request/5G-start data packet is used to notify the UE about initiation of the EAP-5G session, for example, notify the UE to start to send a NAS message (by encapsulating the NAS message into an EAP-5G data packet).

S460: The UE sends an EAP response data packet/5G-NAS data packet to the TNGF, where the data packet includes an AN parameter and a NAS-PDU, and the NAS PDU carries a registration request message. The AN parameter includes parameter information used by the TNGF to select an AMF, for example, a GUAMI, and a selected PLMN ID (or a PLMN ID and an NID).

Optionally, if the UE has accessed a 3GPP system before, for example, by using a 3GPP technology, the UE includes a 5G-GUTI in the registration request message. If the UE has not accessed a 3GPP system before, the registration request message carries a SUCI.

S470: The TNGF performs AMF selection.

S480: The TNGF sends a registration request message to the AMF.

In a possible implementation, when the registration request message does not carry the SUCI, or the AMF successfully verifies integrity protection of the registration request message, the AMF may obtain the SUCI of the UE by sending a request message #5 to the UE. In this implementation, the method procedure shown in FIG. 4 further includes the following steps.

S481: The AMF sends the request message #5 to the UE via an N3IWF. The request message #5 is used to request to obtain the SUCI of the UE.

Optionally, the request message #5 is referred to as a NAS identity request. For example, the AMF sends the NAS identity request to the N3IWF through an N2 communication interface, and the N3IWF encapsulates the NAS identity request into an EAP/5G-NAS data packet and sends the EAP/5G-NAS data packet to the UE. The data packet sent by the N3IWF to the UE may be referred to as an IKE_AUTH request message.

S482: The UE sends a response message #5 to the AMF via the N3IWF. The response message #5 carries the SUCI of the UE.

Optionally, the response message #5 is referred to as a NAS identity response. For example, the UE encapsulates the NAS identity response into an EAP/5G-NAS data packet and sends the EAP/5G-NAS data packet to the N3IWF, and the N3IWF sends the NAS identity response to the AMF through the N2 communication interface. The data packet sent by the UE to the N3IWF may be referred to as an IKE_AUTH response message.

In another possible implementation, when the registration request message carries the SUCI, or the AMF successfully verifies integrity protection of the registration request message, the AMF may initiate a procedure of performing authentication on the UE. In this implementation, the method procedure shown in FIG. 4 further includes the following steps.

S491: The AMF selects an AUSF.

S492: The AMF sends an authentication request message to the AUSF.

S493: The AUSF performs authentication on the UE. Specifically, a procedure in which the AUSF performs authentication on the UE is not described in detail in this embodiment. For details, refer to descriptions in a current related technology.

S494: The AUSF sends an SEAF key to the AMF.

After the authentication is completed, the AUSF sends the SEAF key to the AMF, and the AMF derives a NAS security key and a security key of the TNGF by using the key.

S495: The AMF sends a NAS security mode command (Security Mode Command) to the UE via the TNGF. NAS security is activated. The NAS security mode command includes an EAP-success, indicating that EAP-AKA' authentication performed by a core network succeeds.

S496: The UE sends NAS security mode complete (Security Mode Complete) to the AMF via the TNGF.

Specifically, the TNGF forwards, to the UE, the NAS security mode command sent by the AMF, and sends, to the AMF, the NAS security mode complete message sent by the UE.

S497: The AMF sends a request message #6 to the TNGF. The request message #6 includes a TNGF key.

Optionally, the request message #6 may be referred to as an NGAP initial context setup request message.

Specifically, after the AMF receives the NAS security mode complete message from the UE, the AMF sends the NGAP initial context setup request message to the TNGF, where the NGAP initial context setup request message includes the TNGF key.

S498: The TNGF sends an EAP request/5G-notification (Notification) to the UE.

Specifically, the EAP-response/5G-notification includes address information of the TNGF, and the address information is used by the UE to subsequently establish IPSec SA with the TNGF. The UE sends an EAP-response/5G-notification to the TNGF.

S499: The TNGF sends an AAA message to the TNAP.

The AAA message includes the EAP-success message sent to the UE and a TNAP key that is derived by the TNGF and sent by the TNGF to the TNAP.

S401: The TNAP sends the EAP-success (Success) to the UE. After the UE receives the EAP-success, it indicates that the EAP-5G session is completed, and no EAP-5G data packet is exchanged subsequently.

In still another possible implementation, when the registration request message carries the 5G-GUTI, and integrity protection of the registration request message is successfully verified, the AMF may determine not to initiate authentication. In this case, steps S481, S482, and S491 to S401 may not be performed.

S402: Establish L2 security between the UE and the TNAP.

S403: The UE receives an IP configuration of the TNAN, for example, according to the dynamic host configuration protocol (Dynamic host configuration protocol, DHCP), that is, the UE obtains an IP address of the UE.

S404: The UE initiates establishment of a secure NWt (a connection interface between the UE and the TNGF is defined as NWt in a standard) connection to the TNGF. The UE is successfully connected to the TNAN, and obtains the IP configuration. The UE initiates IKE_INIT interaction by using an address of the TNGF. In the interaction, a UE identifier (identifier, ID) provided by the UE is the same as the UE ID included in step S460. This is to enable the TNGF to determine a TNGF key corresponding to the UE. The TNGF key is used for two-way authentication. Transmission between the UE and the TNGF is not encrypted because a network is trusted (is deployed by an operator and is considered trusted, and therefore transmission is not encrypted).

The TNGF allocates an "inner" IP address, a TCP port, a NAS_IP_ADDRESS, and a differentiated services code point (differentiated services code point, DSCP) value to the UE. All IP data packets transmitted between the UE and the TNGF are marked with the DSCP value. The UE and the TNAP may map the DSCP value to a corresponding QoS class. After the signaling IPSec SA is established, the UE establishes a TCP connection to the TNGF by using NAS _IP_ADDRESS and the TCP port. Transmission of all subsequent NAS messages is performed through the signaling IPSec SA. For an uplink NAS message sent by the UE to the AMF, a source address is the "inner" IP address of the UE, and a destination address is NAS_IP_ADDRESS. For a downlink NAS message sent by the AMF to the UE, a source address is NAS_IP_ADDRESS, and a destination address is the "inner" IP address of the UE.

S405: The TNGF sends a notification message to the AMF. After the NWt connection is successfully established, the TNGF notifies the AMF by using the notification message (for example, an NGAP initial context setup response message) that a context of the UE has been created.

S406: The AMF sends an N2 message to the TNGF.

The N2 message includes a NAS registration accept message (NAS Registration Accept) sent to the UE. Subsequently, when the AMF registers with a UDM, the AMF needs to provide the UDM with an access type of non-3GPP access. The TNGF sends a NAS registration request to the UE through the newly established signaling IPSec SA.

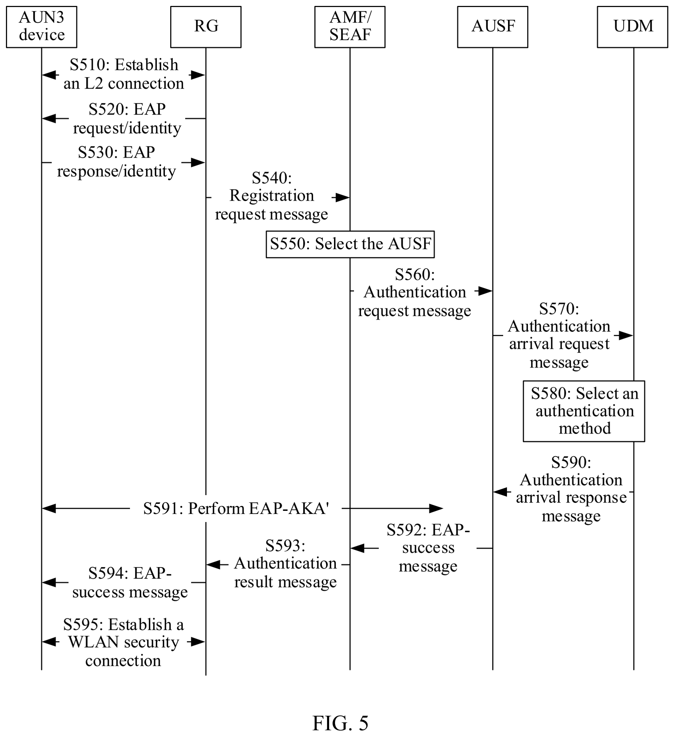

7. An AUN3 device that does not support a 5G key hierarchy accesses a 5GC: As shown in FIG. 5, the AUN3 device that does not support the 5G key hierarchy accesses the 5GC, which includes the following steps.

S510: The AUN3 device attempts to establish an L2 connection to an RG by using the Ethernet or Wi-Fi.

S520: The RG sends an EAP request/identity to the AUN3 device. The EAP request/identity (EAP request/Identity) is used to start an EAP authentication process.

Optionally, the RG sends the EAP request/identity to the AUN3 device in a layer frame (for example, the extensible authentication protocol (Extensible Authentication Protocol Over Lan, EAPOL)).

S530: The AUN3 device sends an EAP response/identity to the RG.

Specifically, the AUN3 device returns the EAP-response/identity in a form of a username@realm (username@realm), where the EAP-response/identity includes a network access identifier (NAI) of the AUN3 device. If the AUN3 device supports SUPI protection, a user name part of the NAI may be encrypted.

Optionally, if the RG is an FN-RG, the FN-RG sends the EAP response/identity (EAP response/identity) including the NAI to a W-AGF. The W-AGF uses a NULL scheme to construct a SUCI based on a SUPI in the NAI and sends a NAS registration request message to an AMF, including the SUCI and an AUN3 device indication.

Optionally, if the RG is a 5G-RG, the 5G-RG constructs a SUCI based on a SUPI in the NAI, and sends a NAS registration request message to an AMF, including the SUCI and an AUN3 device indication.

S540: The RG sends a registration request message to the AMF/an SEAF.

S550: The AMF/SEAF selects an AUSF.

S560: The AMF/SEAF sends an authentication request message to the AUSF.

Specifically, the AMF/SEAF selects the AUSF based on the SUCI in the received registration request, and sends the authentication request message (for example, an Nausf_UEAuthentication_Authentication Request message) to the AUSF. The authentication request message includes the SUCI of the AUN3 device and the AUN3 device indication.

S570: The AUSF sends an obtaining request message (Nudm_UEAuthentication_Get request) to a UDM, where the obtaining request message includes the SUCI of the AUN3 device and the AUN3 device indication.

S580: The UDM selects an authentication method. Specifically, the UDM invokes an SIDF to decrypt the SUCI to obtain the SUPI, and selects the authentication method based on the SUPI.

S590: The UDM sends an obtaining response message (Nudm_UEAuthentication_Get response) to the AUSF, where the obtaining response message includes the SUPI of the AUN3 device and an indication for the selected authentication method, for example, an indication for selected EAP-AKA'.

S591: The AUSF and the AUN3 device perform the selected authentication method.

If EAP authentication between the AUSF and the AUN3 device is successfully completed, the method procedure shown in FIG. 5 further includes the following steps.

S592: The AUSF sends an EAP-success (Success) message to the AMF/SEAF, and includes the SUPI and MSK in an Nausf_UEAuthentication_Authentication Response message.

S593: The AMF/SEAF sends an authentication result message to the RG. The AMF/SEAF sends the authentication result message including the EAP-success message and the MSK to the 5G-RG.

S594: The RG sends the EAP-success message to the AUN3 device. Specifically, the RG sends the EAP-success message to the AUN3 device in a layer-2 frame.

S595: The AUN3 and the RG perform four-way handshake to establish a WLAN security connection. The AUN3 device and RG use the first 256 bits of the MSK as PMK. A WLAN key is derived from the PMK.

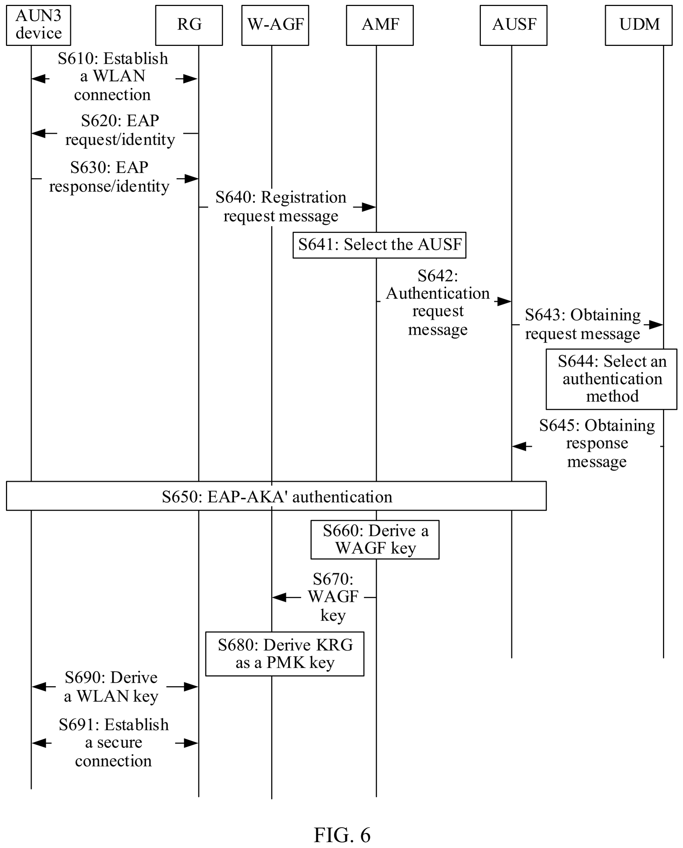

8. An AUN3 device that supports a 5G key hierarchy accesses a 5GC: As shown in FIG. 6, the AUN3 device that supports the 5G key hierarchy accesses the 5GC, which includes the following steps.

S610: The AUN3 device establishes a WLAN connection to an access point (access point, AP) (for example, an RG shown in FIG. 6) of a WLAN access network (AN). Optionally, the AUN3 device establishes the WLAN connection to the RG based on a WLAN connection establishment procedure specified in a current protocol (for example, IEEE 802.11). A specific WLAN connection establishment procedure is not limited in this embodiment.

S620: The RG sends an EAP request/identity to the AUN3 device. The EAP request/identity (EAP request/Identity) is used to start an EAP authentication process.

Optionally, the RG sends the EAP request/identity to the AUN3 device in a layer frame (for example, the extensible authentication protocol (Extensible Authentication Protocol Over Lan, EAPOL)).

S630: The AUN3 device sends an EAP response/identity to the RG.

Specifically, the AUN3 device returns the EAP-response/identity in a form of a username@realm (username@realm), where the EAP-response/identity includes a network access identifier (NAI) of the AUN3 device or a SUCI of a 5G-GUTI.

Optionally, if the RG is an FN-RG, the FN-RG sends the EAP response/identity including the NAI to a W-AGF. The W-AGF creates a registration request on behalf of the AUN3 device, and indicates that registration is performed on behalf of the AUN3 device, where an interface between the AUN3 device and the RG needs to be protected. The W-AGF selects an AMF/SEAF, and the W-AGF sends a registration request to the AMF/SEAF on behalf of the AUN3 device. The registration request includes an NAI SUCI, a wired network name (if available), and a new indication. Same message content is forwarded from the AMF to an AUSF, and then forwarded from the AUSF to a UDM.

Optionally, if the RG is a 5G-RG, the 5G-RG sends a NAS registration request message to an AMF, including a received SUCI and an encryption indication needed by the AUN3 device.

S640: The RG sends the registration request message to the AMF/SEAF. The registration request message includes the received SUCI and the encryption indication needed by the AUN3 device.

S641: The AMF/SEAF selects the AUSF.

S642: The AMF/SEAF sends an authentication request message to the AUSF.

S643: The AUSF sends an obtaining request message to the UDM.

S644: The UDM selects an authentication method.

S645: The UDM sends an obtaining response message to the AUSF.

For step S641 to step S645, refer to the descriptions of step S550 to step S590 in FIG. 5. Details are not described herein again.

S650: Perform EAP-AKA' authentication. Optionally, an EAP-AKA' authentication process is performed according to a definition in a current protocol (for example, section 6.1.3.1 of TS 33.501[4]).

S660: The AMF derives a WAGF key. Specifically, the AMF derives the WAGF key based on the new encryption indication needed by the AUN3 device in step S640.

S670: The AMF provides the WAGF key (KWAGF') for the W-AGF. Optionally, the AMF sends a NAS security mode command mode, and provides the WAGF key for the W-AGF.

S680: The W-AGF derives KRG as a PMK key. Specifically, the W-AGF derives KRG from the WAGF key (KWAGF'), and uses KRG as the PMK key.

S690: The RG and the AUN3 device derive a WLAN key. Specifically, the RG and the AUN3 device derive the WLAN key from the PMK key.

S691: The RG establishes a secure connection to the AUN3 device. Optionally, the RG and the AUN3 device perform four-way handshake, to establish a secure connection to a WLAN AN.

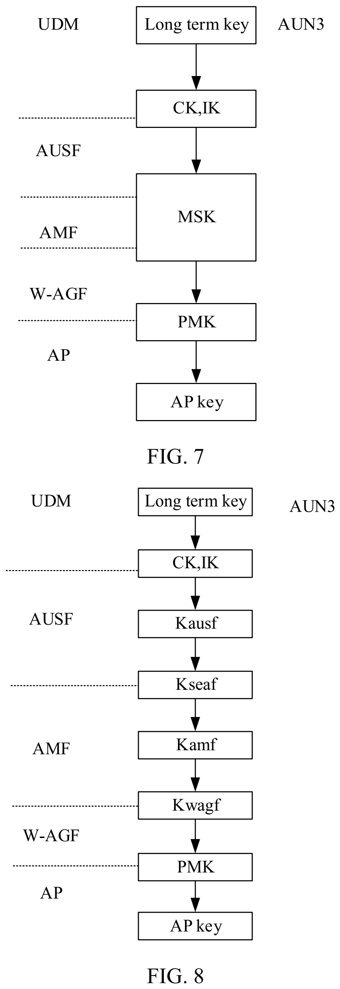

9. Non-5G key hierarchy: For the foregoing procedure in which the AUN3 device accesses the 5GC in FIG. 5, a key hierarchy of UE and a network side is shown in FIG. 7.

It can be learned from FIG. 7 that a long term key (long term key) is stored in the AUN3 device and a UDM. When CK,IK appears on both the UDM and an AUSF, it indicates that CK,IK is transmitted from the UDM to the AUSF. MSK is generated by the AUSF and transmitted to a WAGF via an AMF. Then, the WAGF generates PMK based on MSK and transmits PMK to an AP. The AP then generates an AP key, and the UE side generates a same key according to the procedure. In this case, the AP may correspond to the 5G-RG mentioned in the foregoing procedure.

10. 5G key hierarchy: For the foregoing procedure in which the AUN3 device accesses the 5GC in FIG. 6, a key hierarchy of UE and a network side is shown in FIG. 8.

It can be learned from FIG. 8 that a long term key is stored in the AUN3 device and a UDM. When CK,IK appears on both the UDM and an AUSF, it indicates that the key is transmitted from the UDM to the AUSF. Kausf or Kseaf is generated by the AUSF and transmitted to an AMF. Then, the AMF generates Kamf based on Kausf or Kseaf and transmits Kamf to a WAGF. Then, the WAGF generates PMK based on Kamf, and transmits PMK to an AP. The AP then generates an AP key, and the UE side generates a same key according to the procedure. In this case, the AP may correspond to the 5G-RG mentioned in the foregoing procedure.

In addition, to facilitate understanding of embodiments of this application, the following several descriptions are provided.

First, in embodiments of this application, "indicate" may include "directly indicate" and "indirectly indicate". When a piece of indication information is described as indicating A, the indication information may directly indicate A or indirectly indicate A, but it does not necessarily indicate that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

Second, "at least one" shown in embodiments of this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "910" and "920" are merely identifiers for ease of description, and do not limit a sequence of performing steps.

Third, in embodiments of this application, words such as "example" or "for example" are used to give an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

Fourth, "store" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, the terms and English abbreviations are all examples given for ease of description, and should not constitute any limitation on this application. This application does not exclude a possibility of defining another term that can implement same or similar functions in an existing or future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes the scenario to which the communication method provided in embodiments of this application can be applied, describes the basic concepts that may be used in embodiments of this application, and describes, in the basic concepts, the procedure in which the AUN3 device that does not support the 5G key hierarchy accesses the 5GC, and the procedure in which the AUN3 device that supports the 5G key hierarchy accesses the 5GC. Based on the descriptions of the procedure in which the AUN3 device accesses the 5GC in FIG. 5 and FIG. 6, the AMF and the AUSF mainly use an identifier to determine whether the AUN3 device supports the 5G key hierarchy, that is, the encryption indication used in the procedure in which the AUN3 device accesses the 5GC shown in FIG. 6. When there is an encryption indication, the AMF and the AUSF generate a related key based on the 5G key hierarchy. When there is no encryption indication, the AMF and the AUSF generate a related key based on the non-5G key hierarchy. Specifically, the encryption indication is added by the 5G-RG when the 5G-RG sends the NAS registration request message to the AMF.

A problem in the procedure in which the AUN3 device accesses the 5GC is how the 5G-RG determines and confirms whether the AUN3 device supports the 5G key hierarchy. Therefore, this application mainly resolves how to determine whether the AUN3 device supports the 5G key hierarchy.

This application provides a communication method, and the communication method may be applied to the communication scenario shown in FIG. 1. An application scenario is not limited in this application.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a network element, or a functional module that can invoke and execute a program in a network element.

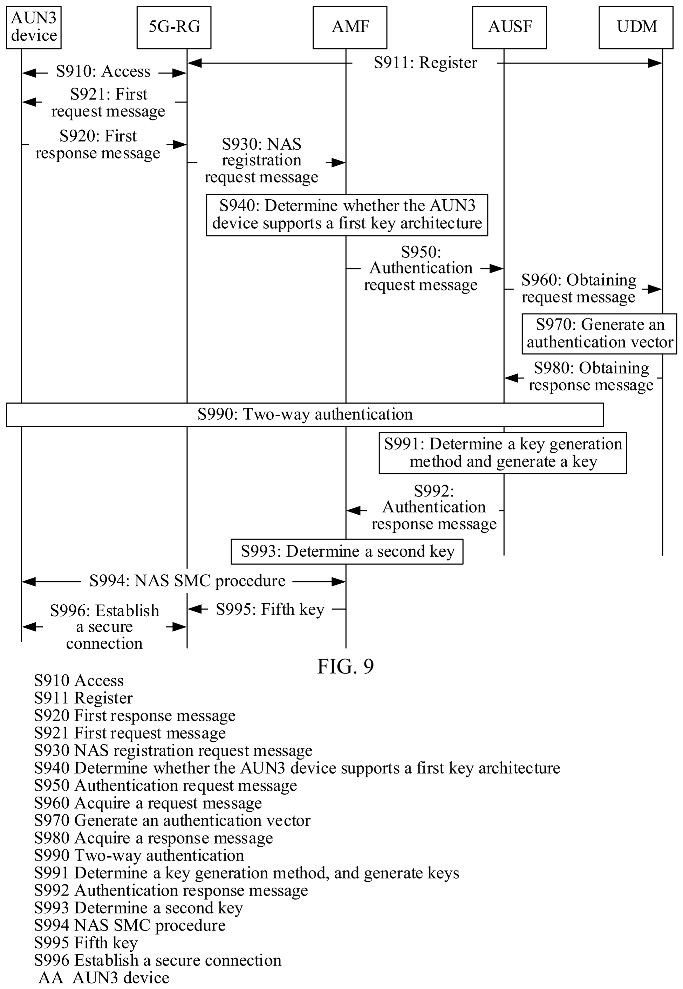

FIG. 9 is a schematic flowchart of a communication method according to this application. The following steps are included.

S911: A first gateway registers with a core network.

In this embodiment, the first gateway is a gateway that can be connected to a core network, is responsible for assisting an AUN3 device in accessing the core network, and may be a 5G-RG or another network element that can implement a function of the 5G-RG. For ease of description, the following uses an example in which the first gateway is a 5G-RG for description. When the first gateway is another device (node or network element), the 5G-RG in the following is replaced with a corresponding device. Details are not described again.

In this embodiment, for a 5GC, the 5G-RG may be considered as a terminal device. For a procedure in which the 5G-RG registers with the 5GC, refer to descriptions of a procedure in which the terminal device registers with the 5GC in a current related technology. In this embodiment, how the 5G-RG registers with the 5GC is not described in detail.

S910: The AUN3 device establishes a connection to the 5G-RG.

In this embodiment, the AUN3 device is a terminal device connected to the core network via the 5G-RG, and may be understood as a terminal device that supports non-3GPP communication (for example, supports Wi-Fi communication).

Specifically, after establishing the connection to the 5G-RG, the AUN3 device may access the core network through the connection. The AUN3 device may initiate a registration procedure to the core network via the 5G-RG. For example, the AUN3 device sends a registration request to the 5G-RG by using an EAP authentication procedure, and then the 5G-RG forwards the registration request to the core network, to initiate a registration procedure between the AUN3 device and the 5G-RG.

The method procedure shown in FIG. 9 further includes the following steps.

S921: The 5G-RG sends a first request message to the AUN3 device, or in other words, the AUN3 device receives a first request message from the 5G-RG.

Specifically, the first request message is used to request identity information from the AUN3 device, and the identity information is used by the core network to perform identity authentication on the AUN3 device. For example, the first request message is used to start an authentication procedure. In this case, the first request message may be an EAP-request/identity message. It should be understood that the first request message may alternatively be another message that can request the identity information of the AUN3 device. A specific message type of the first request message is not limited in this embodiment of this application, provided that a corresponding function can be implemented. For ease of description, an example in which the first request message is an EAP-request/identity message is used below for description.

Another message may be transmitted between step S910 and step S921. This is not specifically limited in this embodiment of this application.

S920: The AUN3 device sends a first response message to the 5G-RG, or in other words, the 5G-RG receives a first response message from the AUN3 device. The first response message includes the identity information of the AUN3 device, and the first response message indicates whether the AUN3 device supports a first key hierarchy.

Optionally, when the first request message is an EAP-response/identity request message, the first response message further includes an EAP response message, to respond to the first request message.

In this embodiment, the first key hierarchy may be any key hierarchy. For example, the first key hierarchy may be one of a 5G key hierarchy, a non-5G key hierarchy, a 4G 3GPP key hierarchy (refer to a related definition in TS33.401), a 4G non-3GPP key hierarchy (refer to a related definition in TS33.402), or another key hierarchy.

A manner of deriving a key needed for security protection by a network side when the AUN3 device supports the first key hierarchy is different from a manner of deriving a key needed for security protection by the network side when the AUN3 device does not support the first key hierarchy.

Specifically, the AUN3 device and the network side derive, based on whether the AUN3 device supports the first key hierarchy, a key needed for security protection. When the AUN3 device supports the first key hierarchy, the AUN3 device and the network side derive, in a first key derivation manner, a key needed for security protection. When the AUN3 device does not support the first key protection manner, the AUN3 device and the network side derive, in a second key derivation manner, a key needed for security protection. The first key derivation manner may be understood as that the AUN3 device and the network side perform key derivation based on the first key hierarchy, and the second key derivation manner may be understood as that the AUN3 device and the network side perform key derivation based on a second key hierarchy. The second key hierarchy is a key generation manner different from the first key hierarchy. For a definition of the second key hierarchy, refer to related descriptions of the first key hierarchy. For example, if the 5G key hierarchy is the first key hierarchy, the non-5G key hierarchy is the second key hierarchy.

For example, the first key hierarchy may be the 5G key hierarchy (as shown in FIG. 8) described in the foregoing basic concepts, or may be a key hierarchy defined in a future 3GPP standard. This embodiment is described by using the 5G key hierarchy described in the basic concepts as an example. If the AUN3 device supports the 5G key hierarchy, a procedure of deriving the key by the network side is as follows: An AUSF generates Kausf based on CK, IK. The AUSF uses the Kausf or Kseaf, and transmits the Kseaf to an AMF. The AMF generates Kamf based on the Kseaf, further generates Kwagf, and transmits the Kwagf to a WAGF. The WAGF generates PMK based on the Kwagf, and transmits the PMK to the 5G-RG. The 5G-RG generates, based on the PMK, a key needed for security protection. A procedure of deriving the key by the AUN3 device side is as follows: The AUN3 device derives CK, IK based on a locally stored long term key, generates Kausf based on CK, IK, generates Kseaf based on the Kausf, generates Kamf based on the Kseaf, generates Kwagf based on the Kamf, then generates PMK based on the Kwagf, and finally generates, based on the PMK, a key needed for security protection.

Alternatively, if the AUN3 device does not support the 5G key hierarchy, a procedure of deriving the key by the network side is as follows: An AUSF generates MSK based on CK, IK, and transmits the MSK to a WAGF via an AMF. The WAGF generates PMK based on the MSK, and transmits the PMK to the 5G-RG. The 5G-RG generates, based on the PMK, a key needed for security protection. A procedure of deriving the key by the AUN3 device side is as follows: The AUN3 device derives CK, IK based on a locally stored long term key, generates MSK based on CK, IK, then generates PMK based on the MSK, and finally generates, based on the PMK, a key needed for security protection.

The foregoing security protection may be understood as encryption and integrity protection on a connection between the AUN3 device and the 5G-RG. For example, a sender performs encryption and integrity protection on a message based on a generated key, and a receiver performs decryption and integrity protection verification on the message based on the key.

In this embodiment, the AUN3 device sends the first response message to the 5G-RG, to assist the 5G-RG in determining whether the AUN3 device supports the first key hierarchy, so that a subsequent core network element can determine whether the AUN3 device that currently requests access supports the first key hierarchy, and select a proper key derivation manner to generate a key, to improve communication security.

Optionally, in this embodiment, the first response message sent by the AUN3 device to the 5G-RG includes an EAP response message and information indicating whether the AUN3 device supports the first key hierarchy, which may also be understood as that the AUN3 device sends, to the 5G-RG, the EAP response message and the information indicating whether the AUN3 device supports the first key hierarchy. That the AUN3 device sends, to the 5G-RG, the EAP response message and the information indicating whether the AUN3 device supports the first key hierarchy includes but is not limited to the following possible implementations.

In a possible implementation, that the AUN3 device sends, to the 5G-RG, the EAP response message and the information indicating whether the AUN3 device supports the first key hierarchy is: The AUN3 device sends the EAP response message to the 5G-RG, where the EAP response message includes first indication information. In this implementation, the information indicating whether the AUN3 device supports the first key hierarchy may be understood as that, in addition to an AUN3 identity, a newly added information element (information element, IE) in the EAP response message carries the information indicating whether the AUN3 device supports the first key hierarchy. For example, the first response message is EAP-response/identity (AUN3 ID, information indicating whether the AUN3 device supports the first key hierarchy).

In another possible implementation, that the AUN3 device sends, to the 5G-RG, the EAP response message and the information indicating whether the AUN3 device supports the first key hierarchy is: The AUN3 device sends the EAP response message to the 5G-RG, where the EAP response message includes the information indicating whether the AUN3 device supports the first key hierarchy. In this implementation, the information indicating whether the AUN3 device supports the first key hierarchy may be understood as that the EAP response message includes only an AUN3 identity, and in this case, the AUN3 identity has an indication function. For example, the first response message is EAP-response/identity (AUN3 ID).

In still another possible implementation, that the AUN3 device sends, to the 5G-RG, the EAP response message and the information indicating whether the AUN3 device supports the first key hierarchy is: The AUN3 device separately sends, to the 5G-RG, the EAP response message and the information indicating whether the AUN3 device supports the first key hierarchy. In this implementation, the information indicating whether the AUN3 device supports the first key hierarchy may be understood as an IE newly added outside the EAP response message.

It should be understood that, in this embodiment, how to send, to the 5G-RG, the information indicating whether the AUN3 device supports the first key hierarchy is not limited. An existing message or an existing IE may be reused to transmit the first indication information, or newly added signaling or a newly added IE may be used to transmit the information indicating whether the AUN3 device supports the first key hierarchy. Details are not described herein again. For example, the first response message is the EAP-response/identity and the information indicating whether the AUN3 device supports the first key hierarchy.

By way of example and not limitation, a procedure in which the 5G-RG sends the first request message to the AUN3 device in step S921 and the AUN3 device sends the first response message to the 5G-RG in step S920 is a message that needs to be transmitted for performing the EAP authentication procedure between the AUN3 device and the 5G-RG. For example, the first request message includes the EAP request message, and the first response message includes the EAP response message. For descriptions related to the EAP request message and the EAP response message, refer to descriptions of messages mentioned for starting the EAP authentication procedure in a current related technology. Descriptions of the EAP request message and the EAP response message are provided in the following three implementations (for example, the following implementation A, implementation B, and implementation C).

Implementation A: If an untrusted non-3GPP technology is used for access between the AUN3 device and the 5G-RG in this embodiment, for related descriptions of the first request message, refer to the descriptions of the response message #1 in the registration procedure in FIG. 3; and for related descriptions of the first response message, refer to the descriptions of the request message #2 in the registration procedure in FIG. 3. Details are not described herein again.

In the case shown in the implementation A, the AUN3 device is notified, by transmitting an IKE_AUTH request message and an IKE_AUTH response message between the AUN3 device and the 5G-RG, about initiation of an EAP-5G session. After receiving an EAP-request/5G-start data packet, the AUN3 device sends the EAP response message. For a specific procedure, refer to the descriptions of step S330 to step S360 in the registration procedure shown in FIG. 3. The AUN3 device is considered as the UE in FIG. 3, and the 5G-RG is considered as the N3IWF in FIG. 3. Details are not described herein again.

Implementation B: If a trusted non-3GPP technology is used for access between the AUN3 device and the 5G-RG in this embodiment, for related descriptions of the mentioned first request message, refer to the descriptions of the EAP-req/identity message in the registration procedure in FIG. 4; and for related descriptions of the first response message, refer to the descriptions of the EAP response data packet/5G-NAS data packet in the registration procedure in FIG. 4. Details are not described herein again.

In the case shown in the implementation B, the AUN3 device is notified, by transmitting the EAP-req/identity message, the EAP-res/identity message, and the EAP request/5G-start data packet between the AUN3 device and the 5G-RG, about initiation of an EAP-5G session. For a specific procedure, refer to the descriptions of step S420 to step S460 in the registration procedure shown in FIG. 4. The AUN3 device is considered as the UE in FIG. 4, and the 5G-RG is considered as the TNAP and the TNGF in FIG. 4. Details are not described herein again.

For example, the first response message mentioned in the implementation A and the implementation B includes an EAP-response/5G-NAS data packet #1, and the data packet #1 includes an AN parameter and a registration request message. The AN parameter includes parameter information used by the 5G-RG to select an AMF, for example, a GUAMI, a selected PLMN ID (or a PLMN ID and an NID), and the like.

If the AUN3 device has accessed a 3GPP system before, for example, by using a 3GPP technology, the AUN3 device may include a 5G-GUTI in the registration request message. If the AUN3 device has not accessed a 3GPP system before, the registration request message carries a SUCI.

In the case shown in the implementation C, if a conventional access method is used between the AUN3 device and the 5G-RG in this embodiment, for example, with reference to an access manner mentioned in IEEE 802.1x, for related descriptions of the first request message, refer to the descriptions of step S520 and step S530 in the procedure shown in FIG. 5, or refer to the descriptions of step S620 and step S630 in the procedure shown in FIG. 6.

In the foregoing three implementations, with reference to a transmission manner of the first response message, it may be understood as that the first request message is an EAP-req/identity message or an EAP-req/5G-START message, and the first response is an EAP-RES/identity message or an EAP-response/5G-NAS message. When the first response is an EAP-response/5G-NAS message, according to the foregoing descriptions, the information indicating whether the AUN3 device supports the first key hierarchy may be carried in the EAP-response/5G-NAS message or carried outside the EAP-response/5G-NAS message. When the information indicating whether the AUN3 device supports the first key hierarchy may be carried in the EAP-response/5G-NAS message, an AN parameter part of the EAP-response/5G-NAS message may carry the information indicating whether the AUN3 device supports the first key hierarchy. Specifically, an IE is newly added to the AN parameter to carry the information indicating whether the AUN3 device supports the first key hierarchy, or a UE ID part in the AN parameter has an indication function. When the information indicating whether the AUN3 device supports the first key hierarchy may be carried outside the EAP-response/5G-NAS message, a new IE is sent to the 5G-RG together with the EAP-response/5G-NAS message.

It can be learned from the foregoing three implementations that the AUN3 device in this embodiment may access the 5G-RG by using different procedures.

For example, in this embodiment, before accessing the 5G-RG, the AUN3 device may determine, based on a determining condition or a predefined access manner, a specific procedure used between the AUN3 device and the 5G-RG. The predefined access manner may be understood as an access procedure agreed upon in advance. The determining condition includes but is not limited to determining whether the AUN3 device and the first gateway belong to a same user (or owner), determining whether a user makes a selection, and the like.

If the determining condition is that the AUN3 device and the first gateway do not belong to a same user, or the user confirms that the AUN3 device and the first gateway do not belong to a same user, the AUN3 device determines to access the first gateway by using the procedure corresponding to the implementation A.

If the determining condition is that the AUN3 device and the first gateway belong to a same user, or the user confirms that the AUN3 device and the first gateway belong to a same user, the AUN3 device determines to access the first gateway by using the procedure corresponding to the implementation B.

If the predefined access manner is that access is preferentially performed by using the procedure corresponding to the implementation A, the AUN3 device determines to first attempt to access the first gateway by using the procedure corresponding to the untrusted non-3GPP access technology.

If the predefined access manner is that access is preferentially performed by using the procedure corresponding to the implementation B, the AUN3 device determines to first attempt to access the first gateway by using the procedure corresponding to the trusted non-3GPP access technology.

If the predefined access manner is that access is preferentially performed by using the procedure corresponding to the implementation C, the AUN3 device determines to first attempt to access the first gateway by using the procedure specified in 802.1x and a related protocol.

It should be noted that the determining condition is merely an example, and does not constitute any limitation on the protection scope of this application. The AUN3 device may alternatively determine, in another manner, a manner in which the 5G-RG is accessed, for example, by determining communication quality or a communication distance of the 5G-RG. Examples are not described one by one herein.

Alternatively, the AUN3 device may first search for a specific type of 5G-RG, and determine, based on the 5G-RG, an implementation to be used. Specifically, the AUN3 selects a 5G-RG based on an implementation, a configuration, a capability of the AUN3, or a capability of the 5G-RG, and determines, based on the selected 5G-RG, to use the implementation A, the implementation B, or the implementation C. For example, if the UE finds that there is a nearby 5G-RG that may use the trusted non-3GPP access procedure, after the UE determines to select this 5G-RG, the AUN3 device performs access in the implementation A. For another example, if the UE finds a 5G-RG that may use the untrusted non-3GPP access procedure, after the UE determines to select this 5G-RG, the AUN3 device performs access in the implementation B. For another example, if the UE finds a 5G-RG that may use the 802.1x access procedure, after the UE determines to select this 5G-RG, the AUN3 device performs access in the implementation C.

Specifically, in this embodiment, that the information indicating whether the AUN3 device supports the first key hierarchy indicates whether the AUN3 device supports the first key hierarchy includes the following several possible implementations.

In a possible implementation, the information indicating whether the AUN3 device supports the first key hierarchy indicates that the AUN3 device supports the first key hierarchy.

In this implementation, when the AUN3 device supports the first key hierarchy, the AUN3 device sends, to the 5G-RG, the information indicating whether the AUN3 device supports the first key hierarchy. When the AUN3 device does not support the first key hierarchy, the AUN3 device may not send, to the 5G-RG, the information indicating whether the AUN3 device supports the first key hierarchy.

In another possible implementation, the information indicating whether the AUN3 device supports the first key hierarchy indicates that the AUN3 device does not support the first key hierarchy. In this implementation, when the AUN3 device does not support the first key hierarchy, the AUN3 device sends, to the 5G-RG, the information indicating whether the AUN3 device supports the first key hierarchy. When the AUN3 device supports the first key hierarchy, the AUN3 device may not send, to the 5G-RG, the information indicating whether the AUN3 device supports the first key hierarchy.

In still another possible implementation, when the AUN3 device supports the first key hierarchy, the AUN3 device sets, to a first value, the information indicating whether the AUN3 device supports the first key hierarchy. When the AUN3 device does not support the first key hierarchy, the AUN3 device sets, to a second value, the information indicating whether the AUN3 device supports the first key hierarchy.

For example, in this embodiment of this application, that the first response message indicates whether the AUN3 device supports the first key hierarchy includes the following two possible manners.

Manner #1: The first response message includes identity information of the AUN3 device, and the identity information indicates whether the AUN3 device supports the first key hierarchy.

In a possible implementation, when the identity information is a first identifier, the identity information indicates that the terminal device does not support the first key hierarchy; or when the identity information is a second identifier, the identity information indicates that the terminal device supports the first key hierarchy. The first identifier is different from the second identifier.

For example, the identity information is a SUPI or a SUCI. When the identity information of the AUN3 device carried in the EAP response message (that is, the first response message) is a SUPI, it indicates that the AUN3 device does not support the first key hierarchy. When the identity information of the AUN3 device carried in the EAP response message is a SUCI, it indicates that the AUN3 device supports the first key hierarchy.

Correspondingly, the 5G-RG may distinguish, based on a specific format of the identity information of the AUN3 device, whether the SUPI or the SUCI is received. For example, it is assumed that the SUPI of the AUN3 device is 00-00-5E-00-53-00@5gc.mnc012.mcc345.3gppnetwork.org. If the AUN3 device does not support the first key hierarchy, the sent identity information of the AUN3 device is the SUPI, that is, 00-00-5E-00-53-00@5ge.mnc012.mec345.3gppnetwork.org is sent. If the AUN3 device supports the first key hierarchy, the sent identity information of the AUN3 device is the SUCI, that is, type3.rid0.schid0.userid00-00-5E-00-53-00@5ge.mnc012.mec345.3gppnetwork.org is sent, or an anonymous SUCI is sent, that is, anonymous@5gc.mnc012.mcc345.3gppnetwork.org is sent.

In another possible implementation, when the identity information is a first type of a first identifier, the identity information indicates that the terminal device does not support the first key hierarchy; or
when the identity information is a second type of a first identifier, the identity information indicates that the terminal device supports the first key hierarchy.

For example, the identity information is SUCIs in different formats. Different SUPI formats of the AUN3 device correspond to different SUCI formats. For example, a type of a SUPI that supports the first key hierarchy is a SUPI in an international mobile subscriber identity (International Mobile Subscriber Identification Number, IMSI) format, and a type of a SUPI that does not support the first key hierarchy is a SUPI in an NAI format. A format of a SUCI in an IMSI format is different from that of a SUCI in an NAI format. Therefore, when receiving the SUCI in the NAI format, the 5G-RG determines that the AUN3 device does not support the first key hierarchy. When receiving the SUCI in the IMSI format, the 5G-RG determines that the AUN3 device supports the first key hierarchy. For another example, the SUCI that does not support the first key hierarchy is calculated by using a null algorithm, and the SUCI that supports the first key hierarchy is calculated by using a non-null algorithm.

In still another possible implementation, the identity information includes a field indicating whether the terminal device supports the first key hierarchy.

For example, the identity information may be a SUPI or a SUCI of the AUN3 device, or a field carried in a username or realm part of the SUPI or the SUCI. The identity information may be information of at least one bit of the username or realm part. For example, the username or realm part carries information such as AUN3 or 5GK. The username or realm part of the SUPI or the SUCI carries identity information, to indicate that the first key hierarchy is supported, and the username or realm part of the SUPI or the SUCI does not carry the identity information, to indicate that the first key hierarchy is not supported; or the username or realm part of the SUPI or the SUCI does not carry the identity information, to indicate that the first key hierarchy is supported, and the username or realm part of the SUPI or the SUCI carries the identity information, to indicate that the first key hierarchy is not supported; or the username or realm part of the SUPI or the SUCI carries a first value, to indicate that the first key hierarchy is supported, and the username or realm part of the SUPI or the SUCI carries a second value, to indicate that the first key hierarchy is not supported.

For another example, it is assumed that the SUPI of the AUN3 device is 00-00-5E-00-53-00@5gc.mnc012.mcc345.3gppnetwork.org. When the AUN3 device supports the first key hierarchy, the SUPI carrying the field may be 00-00-5E-00-53-00.5G key hierarchy@5gc.mnc012.mcc345.3gppnetwork.org. In this case, the first response message is an EAP-identity/response (00-00-5E-00-53-00.5G key hierarchy@5gc.mnc012.mcc345.3gppnetwork.org).

Alternatively, the SUPI carrying the field may be 00-00-5E-00-53-00@5G key.5gc.mnc012.mcc345.3gppnetwork.org. In this case, the first response message is an EAP-identity/response (00-00-5E-00-53-00 @5G key hierarchy.5gc.mnc012.mcc345.3gppnetwork.org). If the AUN3 device does not support the first key hierarchy, the SUPI may be 00-00-5E-00-53-00@5gc.mnc012.mcc345.3gppnetwork.org. In this case, the first response message is an EAP-identity/response (00-00-5E-00-53-00 @5gc.mnc012.mcc345.3gppnetwork.org).

For example, it is assumed that the SUPI of the AUN3 device is Network Specific Identifier userl7@example.com, and the corresponding SUCI is typel.rid678.schidl.hnkey27.ecckey<ECC ephemeral public key>.cip< encryption of userl7>.mac<MAC tag value>@example.com. When the AUN3 device supports the first key hierarchy, the SUCI carrying the field is typel.rid678.schidl.hnkey27.ecckey<ECC ephemeral public key>.cip< encryption of user17>.mac<MAC tag value>@AUN3.example.com,typel.rid678.schidl.hnkey27.ecckey<ECC ephemeral public key>.cip< encryption of user17>.mac<MAC tag value>@AUN3-5GK.example.com,type1.rid678.schid1.hnkey27.ecckey<ECC ephemeral public key>.cip< encryption of userl7>.mac<MAC tag value>@AUN3-N5GK.example.com. In this case, when the field is AUN3 or AUN3-5GK, it indicates that the 5G key hierarchy is supported; or when the field is not carried or is AUN3-N5GK, it indicates that the 5G key hierarchy is not supported.

Manner #2: The first response message further includes first indication information, and the first indication information indicates whether the AUN3 device supports the first key hierarchy. For example, a possible form of the first indication information includes but is not limited to character string information, bit information, or a non-access stratum protocol data unit NAS-PDU.

For example, the first indication information may be character string indication information (for example, "5G key hierarchy", "5G NAS", "5GK", "N5GK", "AUN3-5GK", or "AUN3-N5GK"). When the character string indication information is always carried, the 5G-RG (including the subsequent AMF and AUSF) may determine, based on the character string information, that the AUN3 device supports the first key hierarchy. When the character string indication information is not always carried, the 5G-RG (including the subsequent AMF and AUSF) determines, when the character string indication information exists based on the first indication information, that the AUN3 device supports the first key hierarchy; or determines, when the character string indication information does not exist, that the AUN3 device does not support the first key hierarchy. This character string may be placed in the SUCI or the SUPI as a part of the SCUI or the SUPI, or may be transmitted as an independent IE. For an example of transmission as a part of the SUCI or the SUPI, refer to the foregoing example. Details are not described herein again.

For example, when transmission is performed as an independent IE, it is assumed that the SUPI of the AUN3 device is 00-00-5E-00-53-00@5gc.mnc012.mcc345.3gppnetwork.org. When the AUN3 device supports the first key hierarchy, the first response message is an EAP-identity/response (00-00-5E-00-53-00 @5gc.mnc012.mec345.3gppnetwork.org, "5G key hierarchy"), or the first response message is "5G key hierarchy", and an EAP-identity/response (00-00-5E-00-53-00 @5gc.mnc012.mec345.3gppnetwork.org). When the AUN3 device supports the first key hierarchy, the first response message is an EAP-identity/response (00-00-5E-00-53-00 @5gc.mnc012.mec345.3gppnetwork.org, "non-5G key hierarchy") (in this case, it indicates that the 5G key hierarchy is not supported), or the first response message is an EAP-identity/response (00-00-5E-00-53-00 @5gc.mnc012.mcc345.3gppnetwork.org, "NULL") (in this case, it indicates that the first key hierarchy is not supported, and a default key hierarchy may be used based on pre-configuration). Alternatively, the first response message is an EAP-identity/response (00-00-5E-00-53-00 @5gc.mnc012.mcc345.3gppnetwork.org) (in this case, it indicates that the first key hierarchy is not supported, and a default key hierarchy may be used based on pre-configuration).

For another example, the first indication information may be bit information, and may include one or more bits, for example, 0, 00, or 01. When a bit is set to a specific value, it indicates that the first key hierarchy is supported, and when a value is set to another specific value, it indicates that a second key hierarchy is supported or the first key hierarchy is not supported; or when the bit information is carried, it indicates that the first key hierarchy is supported, and when the bit information is not carried, it indicates that the first key hierarchy is not supported; or when the bit information is carried, it indicates that the first key hierarchy is not supported, and when the bit information is not carried, it indicates that the first key hierarchy is supported. When there are a plurality of bits, different bits may indicate different key hierarchys. For example, 00 indicates that the first key hierarchy is supported, and 01 indicates that a key hierarchy other than the first key hierarchy is supported.

For another example, the first indication information may be a NAS-PDU. If the first response message carries the NAS-PDU, it indicates that the AUN3 device supports the first key hierarchy. Alternatively, it may be understood as that if the first indication information is the NAS-PDU, it indicates that the AUN3 device supports a NAS protocol, and it is indirectly understood as indicating that the first key hierarchy is supported. It is equivalent to saying that the first indication information may alternatively indicate, by indicating that the AUN3 device supports the NAS protocol (for example, a 5G NAS protocol), that the AUN3 device supports the first key hierarchy. That the AUN3 device supports the 5G NAS protocol indicates that the AUN3 device can generate and process a 5G NAS message (for example, a registration request message, a NAS SMC message, or a PDU session establishment request message).

It should be noted that a function of the identity information or the first indication information carried in the first response message is to indicate whether the AUN3 device supports the first key hierarchy. Therefore, the identity information may also be understood as one type of first indication information. For ease of description, the information that is carried in the first response message and that indicates whether the AUN3 device supports the first key hierarchy is collectively referred to as the first indication information in the following. However, it should be noted that a form of the first indication information in the following includes the identity information.

Optionally, the first response message may include second indication information, and the second indication information indicates whether the AUN3 device supports the non-access stratum NAS protocol. Similar to the first indication information, a possible form of the second indication information includes: a specific format of the identity information of the AUN3 device, a SUPI in a special format, a SUCI in a special format, character string information, bit information, or a NAS-PDU. Details are not described herein again. It should be noted that only one of the first indication information and the second indication information may be sent.

The second indication information may be referred to as 5G NAS indication information #1. The 5G NAS indication information #1 indicates that a NAS registration request message sent by the 5G-RG to the AMF is generated by the AUN3 device. Alternatively, it may be understood as that the 5G NAS indication information #1 is used to notify the AMF that the AUN3 device supports the 5G NAS protocol, and a NAS SMC procedure may be performed between the AMF and the AUN3 device.

In addition, it should be noted that when the AUN3 device sends the first indication information to the 5G-RG, and does not send the second indication information, the first indication information may also indicate that the AUN3 device supports the 5G NAS protocol, and supporting the 5G NAS protocol may also be understood as supporting the first key hierarchy.

In this embodiment, after receiving the first response message, the 5G-RG may determine that the AUN3 device that sends the first response message requests to initiate a registration procedure. In this case, the 5G-RG initiates the registration procedure in place of the AUN3 device. The method procedure shown in FIG. 9 further includes the following steps.

S930: The 5G-RG sends a NAS registration request message to an access and mobility management network element, or in other words, an access and mobility management network element receives a NAS registration request message from the 5G-RG.

In this embodiment, the access and mobility management network element may be an access and mobility management function network element. The network element is responsible for access control and mobility management for the AUN3 device to access an operator network, and may be an AMF or another network element that can implement a function of the AMF. For ease of description, an example in which the access and mobility management network element is an AMF is used below for description.

For example, if the 5G-RG performs message transmission with the AMF via the W-AGF, that the 5G-RG sends the NAS registration request message to the AMF includes: The 5G-RG sends a second request message to the W-AGF, where the second request message carries the NAS registration request message. After receiving the second request message, the W-AGF forwards the NAS registration request message in the second request message to the AMF.

In a possible implementation, when sending the NAS registration request message to the W-AGF, the 5G-RG also sends, to the W-AGF, whether the AUN3 device supports the first key hierarchy. Refer to the related descriptions of step S920. Specifically, the EAP authentication response message in the first response message may be replaced with the NAS registration request message, and the first response message may be replaced with a second response message.

In a possible implementation, if the AUN3 device supports the 5G NAS protocol, the registration request message carried in the first response message is the NAS registration request message.

In this implementation, the 5G-RG forwards, to the AMF, the NAS registration request message carried in the first response message.

In another possible implementation, if the AUN3 device does not support the 5G NAS protocol, the first response message does not carry the NAS registration request message.

In this implementation, the 5G-RG generates the NAS registration request message in place of the AUN3 device, and sends the generated NAS registration request message to the AMF.

Specifically, the NAS registration request message includes third indication information, and the third indication information indicates that a type of a device initiating a registration request is the AUN3 device. The third indication information may be an identifier of the AUN3 device, bit indication information, or character string indication information.

Optionally, the NAS registration request message further includes fourth indication information. The fourth indication information indicates whether the AUN3 device supports the first key hierarchy.

In a possible implementation, the NAS registration request message always carries the fourth indication information, to indicate that the AUN3 device supports or does not support the first key hierarchy.

In another possible implementation, when the AUN3 device supports the first key hierarchy, the NAS registration request message carries the fourth indication information. In this case, that the NAS registration request message carries the fourth indication information indicates that the AUN3 device supports the first key hierarchy, and that the NAS registration request message does not carry the fourth indication information indicates that the AUN3 device does not support the first key hierarchy.

In still another possible implementation, when the AUN3 device does not support the first key hierarchy, the NAS registration request message carries the fourth indication information. In this case, that the NAS registration request message carries the fourth indication information indicates that the AUN3 device does not support the first key hierarchy, and that the NAS registration request message does not carry the fourth indication information indicates that the AUN3 device supports the first key hierarchy.

It can be learned from the descriptions of the first indication information in step S920 that the first indication information indicates whether the AUN3 device supports the first key hierarchy. Therefore, after receiving the first indication information, the 5G-RG may determine, based on the first indication information, whether the AUN3 device supports the first key hierarchy, and therefore determine that the NAS registration request message carries a value or a type of the fourth indication information, to implement a function of indicating, to the AMF and/or the AUSF, whether the AUN3 device supports the first key hierarchy.

For example, when the first key hierarchy is a 5G key hierarchy, when the first indication information indicates that the AUN3 device supports the 5G key hierarchy, and the 5G-RG determines that the AUN3 device supports the 5G key hierarchy, the NAS registration request message does not carry the fourth indication information; or when the first indication information indicates that the AUN3 device does not support the 5G key hierarchy, and the 5G-RG determines that the AUN3 device does not support the 5G key hierarchy, the NAS registration request message carries the fourth indication information. In this case, the fourth indication information indicates that the AUN3 device does not support the 5G key hierarchy. Optionally, the first indication information is completely the same as the fourth indication information. For example, the 5G-RG directly includes the received first indication information in the NAS registration request message and forwards the NAS registration request message to the AMF.

Optionally, the first indication information and the fourth indication information are information having a same meaning but in different forms. In this case, the 5G-RG processes the received first indication information to obtain the fourth indication information. For example, the first indication information is a specific format of the identity information of the AUN3 device, and the fourth indication information is bit indication information.

It should be understood that, regardless of whether a form of the first indication information is the same as a form of the fourth indication information, meanings expressed by the first indication information and the fourth indication information are the same. Therefore, the fourth indication information is not described again. For descriptions of the fourth indication information, refer to the descriptions of the first indication information.

Optionally, the NAS registration request message further includes fifth indication information, and the fifth indication information indicates whether the AUN3 device supports the NAS protocol. For example, the 5G-RG receives the second indication information, and the 5G-RG learns, based on the second indication information, whether the AUN3 device supports the NAS protocol, so that the fifth indication information may be carried in the NAS registration request message. The fifth indication information and the second indication information have a same meaning, and may be in a same form or different forms. For another example, the 5G-RG may determine, based on the received registration request message, that the registration request message is the NAS registration request message, so that the 5G-RG may determine that the AUN3 device supports the NAS protocol, and may include the fifth indication information in the NAS registration request message.

When the NAS registration request message carries the fifth indication information to indicate that the AUN3 device supports the 5G NAS protocol, the fourth indication information may not be carried. In this case, the AMF may determine, based on that the AUN3 device supports the 5G NAS protocol, that the AUN3 device supports or does not support the first key hierarchy.

For example, the third indication information and the fourth indication information may be represented as same indication information. For example, when the first indication information is a SUPI or a SUCI, and the first indication information is carried in a username or realm part, the first indication information may function as both the third indication information and the fourth indication information. Specifically, when the first indication information is "AUN3-5GK" and "AUN3-N5GK", the first indication information indicates the AUN3 device that supports the 5G key hierarchy, or the AUN3 device that does not support the 5G key hierarchy. For another example, when the 5G-RG determines that the AUN3 device supports the 5G key hierarchy, the 5G-RG uses indication information "AUN3-5GK" to indicate both an AUN3 device and a device that supports the 5G key hierarchy. When the 5G-RG determines that the AUN3 device does not support the 5G key hierarchy, the 5G-RG uses indication information "AUN3-N5GK" to indicate both an AUN3 device and a device that does not support the 5G key hierarchy. Therefore, one piece of indication information may be used to include functions of both the third indication information and the fourth indication information. The indication information may be added by the 5G-RG, or may be from the AUN3 device. It should be noted that, if the indication information from the AUN3 device already has the functions of the third information and the fourth indication information, the AMF may not additionally add indication information, or may redundantly add the third indication information and the fourth indication information according to another requirement.

Specifically, in this embodiment, after receiving the NAS registration request message, the AMF may determine, based on information carried in the NAS registration request message, whether the AUN3 device supports the first key hierarchy. The method procedure shown in FIG. 9 further includes the following step.

S940: The AMF determines whether the AUN3 device supports the first key hierarchy.

The AMF determines, based on the third indication information in the NAS registration request message, that registration of the AUN3 device is performed, and determines, based on the fourth indication information or the fifth indication information in the NAS registration request message, whether the AUN3 device supports the first key hierarchy.

In a possible implementation, when the NAS registration request message carries the fifth indication information, the AMF determines, based on the fifth indication information, that the AUN3 device supports the first key hierarchy.

In this implementation, the AMF may determine, based on the fifth indication information, that the AUN3 device supports the 5G NAS protocol, and may exchange a NAS message with the AUN3 device. It may also be understood as that the AMF may determine, based on the fifth indication information, that the NAS registration request message is sent by the AUN3 device, and the AMF may consider the AUN3 device as a common terminal device (that is, UE that may exchange the NAS message). For example, the AMF generates a 5G NAS key, and performs a NAS SMC procedure with the AUN3 device based on the 5G NAS key.

In another possible implementation, the AMF determines, based on the fourth indication information, whether the AUN3 device supports the first key hierarchy. For example, when the fourth indication information indicates that the 5G key hierarchy is not supported, if the NAS registration request message does not carry the fourth indication information, the AMF determines that the AUN3 device supports the 5G key hierarchy. It may also be understood as that the AMF does not determine whether the AUN3 device supports the 5G key hierarchy, and generates a key according to an existing key generation method; or when the NAS registration request message carries the fourth indication information, the AMF determines that the AUN3 device does not support the 5G key hierarchy, and generates a key based on a non-5G key hierarchy. For another example, when the fourth indication information indicates whether the 5G key hierarchy is supported, the AMF determines, based on a specific value of the fourth indication information, whether the AUN3 device supports the 5G key hierarchy, and determines a subsequent key derivation manner based on a determining result.

In still another implementation, the AMF determines, based on the fourth indication information and the fifth indication information, whether the AUN3 device supports the first key hierarchy and a key use method. For example, when the fourth indication information indicates that the AUN3 device supports the first key hierarchy, and the fifth indication information indicates that the NAS protocol is not supported, the AMF may determine, based on the fourth indication information, that the AUN3 device supports the first key hierarchy but determines, based on the fifth indication information, that the 5G NAS protocol is not supported, and the AMF generates a 5G NAS key. The 5G NAS key is used to derive a key between the 5G-RG and the AUN3 device, and the AMF does not exchange a NAS message with the AUN3 device, or the AMF performs NAS exchange with the 5G-RG by using the 5G NAS key, or the AMF determines that an exchange object of the NAS message is the 5G-RG, and therefore may determine different NAS message processing methods. Different NAS message processing methods include but are not limited to: common 5G UE (which may be referred to as a first-type terminal device) and a terminal device that can access a 5GC but has only some functions (which may be referred to as a second-type terminal device). For example, for the first-type terminal device, the 5G UE and the AMF perform a normal NAS SMC procedure, and activate NAS security after the NAS SMC procedure. For the second-type terminal device, after a device or a device that sends a registration request in place of a device interacts with the AMF by using a NAS SMC procedure, NAS security is not activated.

In a possible implementation, in this case, the AMF may determine only that the device is an AUN3 device, and does not determine whether the AUN3 device supports the first key hierarchy. That is, in this step, determining whether the AUN3 device supports the first key hierarchy may not be performed herein, but is performed in step 993.

Further, the AMF sends an authentication request message to an authentication network element, so that the authentication network element performs authentication on the AUN3 device. The method procedure shown in FIG. 9 further includes the following step.

S950: The AMF sends the authentication request message to the authentication network element, or in other words, the authentication network element receives the authentication request message from the AMF.

In this embodiment, the authentication network element is responsible for authentication between the AUN3 device and the operator network, and may be an AUSF or another network element that can implement a function of the AUSF. For ease of description, an example in which the authentication network element is an AUSF is used below for description.

The authentication request message is used to request the AUSF to perform authentication on the AUN3 device, and the authentication request message includes an identifier of the AUN3 device and an SN name. The identifier of the AUN3 device may be a SUCI or a SUPI of the AUN3 device. A value of the SN name includes but is not limited to a preset fixed value (for example, 5G: AUN3, where the fixed value may be a value predefined in a protocol or pre-configured), a PLMN ID of a network to which the AMF belongs, or a home PLMN ID of the SUCI of the AUN3 device (for example, 5G: Home PLMN ID of the AUN3 device).

Optionally, the authentication request message further includes sixth indication information, and the sixth indication information indicates that a to-be-authenticated device is the AUN3 device. It should be noted that, the sixth indication information and the third indication information that is carried in the NAS registration request message in step S930 have a same meaning, and indicate the AUN3 device, but specific representation forms may be the same or different. For example, if the sixth indication information is that the AMF directly forwards the third indication information to the AUSF, representation forms of the sixth indication information and the first indication information are the same. For another example, if the sixth indication information is that the AMF performs processing (for example, padding again) based on the received third indication information and then sends processed third indication information to the AUSF, representation forms of the sixth indication information and the third indication information may be different, or in other words, even if the representation forms are the same, the AMF does not directly forward the received third indication information to the AUSF.

Optionally, the authentication request message further includes eleventh indication information, and the eleventh indication information indicates whether the AUN3 device supports the first key hierarchy. For example, if the eleventh indication information is that the AMF directly forwards the fourth indication information to the AUSF, representation forms of the eleventh indication information and the fourth indication information are the same. For another example, if the eleventh indication information is that the AMF performs processing (for example, padding again) based on the received fourth indication information and then sends processed fourth indication information to the AUSF, representation forms of the eleventh indication information and the fourth indication information may be different, or in other words, even if the representation forms are the same, the AMF does not directly forward the received fourth indication information to the AUSF. For another example, the eleventh indication information may be directly the first indication information, or may be directly the fourth indication information.

In a possible implementation, the authentication request message always carries the eleventh indication information, to indicate that the AUN3 device supports or does not support the first key hierarchy.

In another possible implementation, when the AUN3 device supports the first key hierarchy, the authentication request message carries the eleventh indication information. In this case, that the authentication request message carries the eleventh indication information indicates that the AUN3 device supports the first key hierarchy, and that the authentication request message does not carry the eleventh indication information indicates that the AUN3 device does not support the first key hierarchy.

In still another possible implementation, when the AUN3 device does not support the first key hierarchy, the authentication request message carries the eleventh indication information. In this case, that the authentication request message carries the eleventh indication information indicates that the AUN3 device does not support the first key hierarchy, and that the authentication request message does not carry the eleventh indication information indicates that the AUN3 device supports the first key hierarchy.

In a possible implementation, in this step, the AUSF does not determine whether the AUN3 device supports the first key hierarchy. That is, in this step, the AUSF determining whether the AUN3 device supports the first key hierarchy may not be performed herein, but is performed in step 991. For example, the authentication request message is referred to as an Nausf_UEAuthentication_AuthenticateRequest.

In this embodiment, after receiving the authentication request message, the AUSF sends an obtaining request message to a data management network element, to obtain an authentication credential needed for authentication. The method procedure shown in FIG. 9 further includes the following steps.

S960: The AUSF sends the obtaining request message to the data management network element, or in other words, the data management network element receives the obtaining request message from the AUSF.

In this embodiment, the data management network element is responsible for storing data of a subscriber in the operator network, and may be a UDM or another network element that can implement a function of the UDM. For ease of description, an example in which the data management network element is a UDM is used below for description.

Specifically, the obtaining request message is used to request to obtain an authentication parameter needed for authentication, and is used in a subsequent authentication procedure. The obtaining request message includes the SUCI or the SUPI of the AUN3 device and the SN name.

Optionally, the obtaining request message further includes indication information for the AUN3 device, for example, the sixth indication information, or indication information having the function.

Optionally, the obtaining request message further includes indication information for the first key hierarchy, for example, the eleventh indication information, or indication information having the function.

For example, the obtaining request message is referred to as an Nudm_UEAuthentication_GetRequest.

If the SN name is not carried in step S950, after determining the AUN3 device based on the indication information for the AUN3 device, the AUSF generates the SN name according to the method in step S950; and sends the SN name to the UDM in step S960.

S970: The UDM generates an authentication vector.

For example, when the UDM receives the SUCI of the AUN3 device, the UDM obtains the SUPI of the AUN3 device based on the SUCI of the AUN3 device. Further, the UDM determines an authentication method based on the SUPI of the AUN3 device or the AUN3 device information.

Specifically, the UDM may determine subscription data based on the SUPI of the AUN3 device, and further determine the authentication method based on the subscription data; or
the UDM determines the AUN3 device based on the sixth indication information of the AUN3, and then determines the authentication method.

Further, the UDM generates the corresponding authentication vector (authentication vector, AV) according to the authentication method.

For example, the UDM determines, based on the AUN3 device information, to use an EAP-AKA' authentication method, and generates an EAP-AKA' authentication vector by using the received SN name.

It should be understood that if a type of the SUCI is an anonymous SUCI, the authentication method is determined based on a realm part in the SUCI, and the authentication vector corresponding to the authentication method is further generated.

S980: The UDM sends an obtaining response message to the AUSF, or in other words, the AUSF receives an obtaining response message from the UDM.

The obtaining response message includes the authentication vector.

For example, the obtaining response message is referred to as an Nudm_UEAuthentication_GetResponse message. Optionally, when the UDM receives the SUCI, the obtaining response message carries the SUPI of the AUN3 device.

S990: The AUN3 device and the AUSF perform two-way authentication.

A procedure in which the AUN3 device and the AUSF perform two-way authentication is not limited in this embodiment. For details, refer to descriptions of a procedure in which the AUN3 device and the AUSF perform two-way authentication in a current related technology.

It should be noted that, in an authentication process, the AUN3 device further determines the SN name. Specifically, the AUN3 device generates the same SN name by using the method in step S950. In this embodiment, specific time for the AUN3 device to generate the SN name is not limited. For example, the AUN3 device may generate the SN name after receiving the authentication vector, or may generate the SN name before receiving the authentication vector. The AUN3 device uses the SN name and a parameter in the authentication vector to verify authenticity of the network side.

S991: The AUSF determines a key generation method, and generates a key.

Specifically, if the AUSF has performed determining after receiving the message in step S950, the AUSF does not need to perform determining again. If the AUSF does not perform determining after receiving the message in step S950, the AUSF determines whether the AUN3 device supports the first key hierarchy, and determines the key generation method based on a determining result. For example, the AUSF may determine the key generation method based on the received indication information (for example, the eleventh indication information or the sixth indication information). The eleventh indication information may be directly the first indication information, or may be directly the fourth indication information, and the sixth indication information may be directly the third indication information. For ease of description, an example in which the AUSF determines the key generation method based on the eleventh indication information is used below for description.

In a possible implementation, when the authentication request message indicates, by using the eleventh indication information, that the AUN3 device does not support the 5G key hierarchy, if the authentication request message does not carry the eleventh indication information, the AUSF determines that the AUN3 device supports the 5G key hierarchy. It may also be understood as that the AUSF does not determine whether the AUN3 device supports the 5G key hierarchy, and generates a key according to an existing key generation method, in this case, generates a third key (denoted as Kseaf); or when the authentication request message carries the eleventh indication information, the AUSF determines that the AUN3 device does not support the 5G key hierarchy, and generates a key based on the non-5G key hierarchy, in this case, generates a fourth key (denoted as MSK).

In a possible implementation, when the authentication request message indicates, by using the eleventh indication information, whether the AUN3 device supports the 5G key hierarchy, if the authentication request message carries the eleventh indication information indicating that the AUN3 device supports the 5G key hierarchy, the AUSF generates a third key (denoted as Kseaf); or when the eleventh indication information indicates that the 5G key hierarchy is not supported, the AUSF determines that the AUN3 device does not support the 5G key hierarchy, and generates a key based on the non-5G key hierarchy, in this case, generates a fourth key (denoted as MSK).

S992: The AUSF sends an authentication response message to the AMF, or in other words, the AMF receives an authentication response message from the AUSF.

For example, the authentication response message is referred to as an Nausf_UEAuthentication_AuthenticateResponse message. The Nausf_UEAuthentication_AuthenticateResponse message carries an EAP-success, the SUPI of the AUN3 device, the third key, or the fourth key.

S993: The AMF determines a second key.

In a possible implementation, if the AMF has performed determining in step S940, the AMF determines, based on a determining result in S940, a method for generating the second key, and then generates the second key. If the AMF does not perform determining in step S940, based on the determining method in step S940, the AMF first determines that the AUN3 device supports the first key hierarchy, or determines that the AUN3 device does not support the first key hierarchy, and then determines a method for obtaining the second key. If the second key needs to be generated, the AMF further generates the second key.

In this implementation, an example in which the first key hierarchy is a 5G key hierarchy is used for description. When the AUN3 device supports the 5G key hierarchy, the AMF generates the second key by using the third key.

In a possible implementation, the AMF directly generates the second key by using the third key. For example, if the second key is K_{5G-RG}, the generation method may be: second key = KDF (third key, first parameter, second parameter). At least one of the first parameter and the second parameter is used. The first parameter and the second parameter may be values in a form of a character string, a number, or the like. For example, the first parameter is a fixed value, such as a value of all 0s, or a value of 2³²-1, or an SQN in the authentication vector. The second parameter is, for example, a character string "AUN3", and is, for example, a distinguishing identifier 0x02. This embodiment does not limit use of more input parameters in a DKF function.

In another implementation, the AMF may alternatively first generate a sixth key by using the third key, and then generate the second key by using the sixth key. For example, if the second key is Kwagf, the generation method may be: second key = KDF (sixth key, first parameter, second parameter). The sixth key is generated based on the third key. For example, the sixth key is Kamf. For a specific generation method, refer to a conventional technology. At least one of the first parameter and the second parameter is used. The first parameter and the second parameter may be values in a form of a character string, a number, or the like. For example, the first parameter is a fixed value, such as a value of all 0s, or a value of 2³²-1, or an SQN in the authentication vector. For another example, the first parameter is a character string "AUN3". The second parameter is, for example, a character string "AUN3", and is, for example, a distinguishing identifier 0x02. This embodiment does not limit use of more input parameters in a DKF function.

In addition, optionally, the AMF further generates a NAS encryption key and a NAS integrity protection key by using the sixth key.

When the AUN3 device does not support the 5G key hierarchy, the AMF no longer generates a new key after receiving the fourth key, and determines the fourth key as the second key. Alternatively, the AMF generates a NAS encryption key and a NAS integrity protection key by using the fourth key.

In still another implementation, if the AMF determines, by determining that the AUN3 device supports the 5G NAS, that the AUN3 device supports the first key hierarchy, the AMF may further generate a NAS encryption key and a NAS integrity protection key by using the sixth key, and optionally initiate a NAS SMC procedure with the AUN3 device based on the NAS key. The method procedure shown in FIG. 9 may further include the following steps.

S994: Perform the NAS SMC procedure between the AMF and the AUN3 device.

When the AMF determines that the AUN3 device supports the first key hierarchy, the AMF sends a NAS SMC message to the 5G-RG. A null integrity protection algorithm is used for the NAS SMC message. After receiving the NAS SMC message, the 5G-RG returns a NAS SMP message to the AMF. A null encryption algorithm and the null integrity protection algorithm are used for the NAS SMP message.

When the AMF determines that the AUN3 device supports the NAS protocol, the AMF sends a NAS SMC message to the AUN3 device. The NAS SMC message is protected by using a non-null integrity protection algorithm and a NAS integrity protection key. After receiving the NAS SMC message, the AUN3 device uses the same NAS key and non-null integrity protection algorithm to verify integrity protection of the NAS SMC message. After the verification succeeds, the AUN3 device returns a NAS SMP message to the AMF. Security protection is performed on the NAS SMP message by using the non-null encryption algorithm, the non-null integrity protection algorithm, the NAS integrity protection key, and the NAS encryption key.

When the AMF determines that the AUN3 device does not support the first key hierarchy, the AMF sends a NAS SMC message to the 5G-RG. A null integrity protection algorithm is used for the NAS SMC message. After receiving the NAS SMC message, the 5G-RG returns a NAS SMP message to the AMF. A null encryption algorithm and the null integrity protection algorithm are used for the NAS SMP message.

S995: The AMF sends, to the 5G-RG, a fifth key and a message indicating that identity authentication succeeds, or in other words, the 5G-RG receives a fifth key from the AMF.

For example, the AMF sends a NAS security mode command (Security Mode Command) to the 5G-RG. NAS security is activated. The NAS security mode command includes an EAP-success, where the EAP-success indicates that authentication performed by the core network succeeds, and indicates that identity authentication succeeds.

In a possible implementation, the AMF uses the second key as the fifth key, and may send the fifth key (for example, K5G-RG) to the 5G-RG by using a NAS message or an N2 message. For example, the AMF sends the fifth key by using a NAS downlink transport (NAS DL transport) message or an N2 initial context setup request (N2 initial context setup request) message.

In another possible implementation, the AMF sends the second key to the W-AGF, and the W-AGF determines, based on whether the AUN3 device supports the first key hierarchy, a method for obtaining the fifth key. Specifically, for a method used by the W-AGF to determine whether the AUN3 device supports the first key hierarchy, refer to the related descriptions of performing determining by the AMF in step S940, or the AMF sends the twelfth indication information to the W-AGF, and the W-AGF determines, based on the twelfth indication information, whether the AUN3 device supports the first key hierarchy. When determining that the AUN3 device does not support the first key hierarchy, the W-AGF directly sends the second key as the fifth key to the 5G-RG; or when determining that the first key hierarchy is supported, the W-AGF generates the fifth key based on the second key, and then sends the fifth key to the 5G-RG by using the second response message.

S996: The 5G-RG establishes a secure connection to the AUN3 device.

Specifically, the 5G-RG establishes the secure connection to the AUN3 device based on the fifth key. For example, the 5G-RG and the AUN3 device perform four-way handshake to establish the secure connection.

Before establishing the secure connection, the AUN3 device generates a key #1 based on the fifth key, where the key #1 is used to generate the first key needed for security protection. The first key is used to perform security protection on the secure connection established between the 5G-RG and the AUN3. For example, the first key is used to perform encryption and integrity protection on the connection between the AUN3 device and the 5G-RG. For example, a sender performs encryption and integrity protection on a message based on the first key, and a receiver performs decryption and integrity protection verification on the message based on the first key. If the AUN3 device supports the first key hierarchy (an example in which the first key hierarchy is a 5G key hierarchy is used for description), the AUN3 device generates the key #1 by using the fifth key. Specifically, the key #1 is PMK, the fifth key is Kwagf, and the first key is a key further generated based on PMK.

In a possible implementation, the AUN3 device and the 5G-RG each directly generate the key #1 by using the fifth key. For example, if the key #1 is K_{5G-RG}, the generation method may be: key #1 = KDF (fifth key, first parameter, second parameter). At least one of the first parameter and the second parameter is used. The first parameter and the second parameter may be values in a form of a character string, a number, or the like. For example, the first parameter is a fixed value, such as a value of all 0s, or a value of 2³²-1, or an SQN in the authentication vector. The second parameter is, for example, a character string "AUN3", and is, for example, a distinguishing identifier 0x02. This embodiment does not limit use of more input parameters in a DKF function. After the key #1 is generated, the first key is generated based on the key #1.

In another implementation, the AUN3 device and the 5G-RG each may alternatively generate the sixth key by using the fifth key, generate the second key by using the sixth key, and then generate the key #1 based on the second key. For example, the second key is Kwagf, and then PMK is generated based on Kwagf.

If the AUN3 device does not support the first key hierarchy (an example in which the first key hierarchy is a 5G key hierarchy is used for description), the fifth key is MSK.

Optionally, in a possible implementation, after the 5G-RG establishes the secure connection to the AUN3 device, the 5G-RG returns a message to the AMF, to notify the AMF that establishment of the secure connection is completed. For example, a notification may be sent by using a NAS message or an N2 message, for example, by using a NAS uplink transport (NAS UL transport) message or an N2 initial context setup acknowledgment (N2 initial context setup ack) message.

In still another possible implementation, after the 5G-RG establishes the secure connection to the AUN3 device, the 5G-RG returns a message to the W-AGF, and then the W-AGF notifies the AMF that establishment of the secure connection is completed.

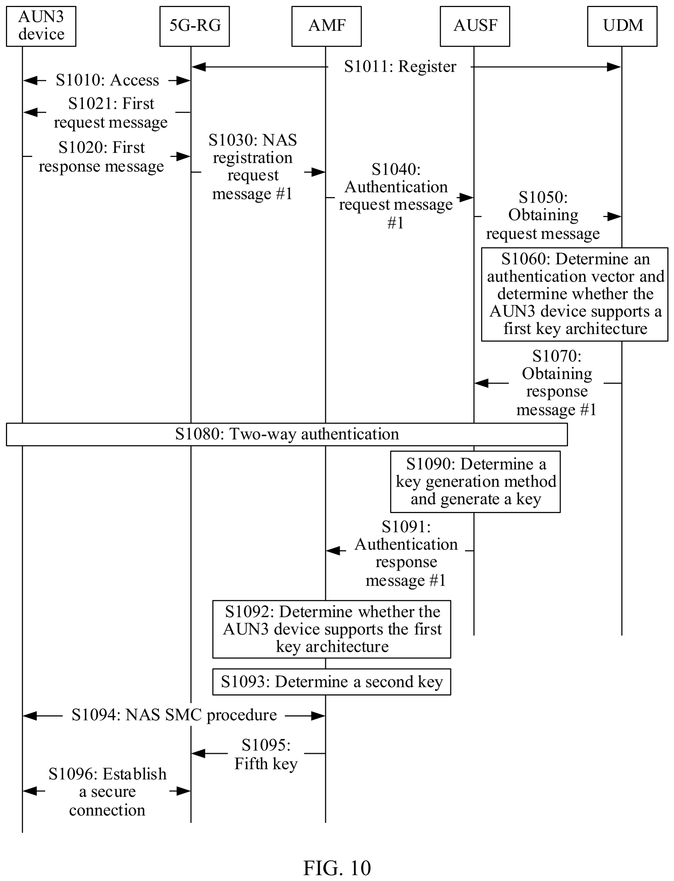

In the embodiment shown in FIG. 9, the 5G-RG may determine, based on information sent by the AUN3 device, whether the AUN3 device supports the first key hierarchy, and the AMF may determine, based on information reported by the 5G-RG, whether the AUN3 device supports the first key hierarchy. This application further provides a communication method. An AMF and an AUSF may determine, based on information received from a UDM, whether an AUN3 device supports a first key hierarchy. The following describes the communication method in detail with reference to FIG. 10.

FIG. 10 is a schematic flowchart of a communication method according to this application. The following steps are included.

S1011: A 5G-RG registers with a 5GC.

For details, refer to the descriptions of step S911 in FIG. 9. Details are not described herein again.

S1010: An AUN3 device establishes a connection to a first gateway.

For details, refer to the descriptions of step S910 in FIG. 9. Details are not described herein again.

S1021: The 5G-RG sends a first request message to the AUN3 device, or in other words, the AUN3 device receives a first request message from the 5G-RG.

For details, refer to the descriptions of step S921 in FIG. 9. Details are not described herein again.

S1020: The AUN3 device sends a first response message to the 5G-RG, or in other words, the 5G-RG receives a first response message from the AUN3 device.

For descriptions of the first response message, refer to the descriptions of the first response message in step S920 in FIG. 9. A difference lies in that the first response message in this embodiment may not indicate whether the AUN3 device supports a first key hierarchy, and details are not described herein again.

S1030: The 5G-RG sends a NAS registration request message to an AMF, or in other words, an AMF receives a NAS registration request message from the 5G-RG.

For descriptions of the NAS registration request message, refer to the descriptions of the NAS registration request message in step S930 in FIG. 9. A difference lies in that the NAS registration request message in this embodiment may not carry fourth indication information, and details are not described herein again. For ease of differentiation, the NAS registration request message in this embodiment is denoted as a NAS registration request message #1.

S1040: The AMF sends an authentication request message to an AUSF, or in other words, an AUSF receives an authentication request message from the AMF.

For descriptions of the authentication request message, refer to the descriptions of the authentication request message in step S950 in FIG. 9. In this embodiment, the authentication request message may not carry eleventh indication information, and details are not described herein again. For ease of differentiation, the NAS registration request message in this embodiment is denoted as an authentication request message #1.

S1050: The AUSF sends an obtaining request message to a UDM, or in other words, a UDM receives an obtaining request message from the AUSF.

For details, refer to the descriptions of step S960 in FIG. 9. Details are not described herein again.

S1060: The UDM determines an authentication vector and obtains whether the AUN3 device supports the first key hierarchy.

Specifically, for a manner of determining the authentication vector by the UDM, refer to the descriptions of how to determine the authentication vector in step S970 in FIG. 9. Details are not described herein again. This embodiment mainly relates to how the UDM obtains information about whether the AUN3 device supports the first key hierarchy, and how to indicate, to the AMF and the AUSF, whether the AUN3 device supports the first key hierarchy.

In a possible implementation, the UDM may obtain a SUPI of the AUN3 device in step S1060, determine subscription data based on the SUPI of the AUN3 device, and then determine, based on the subscription data, whether the AUN3 device supports the first key hierarchy and/or a 5G NAS, to obtain seventh indication information and/or eighth indication information, where the seventh indication information indicates whether the AUN3 device supports the first key hierarchy, and the eighth indication information indicates whether the AUN3 device supports the 5G NAS.

In another possible implementation, the subscription data of the AUN3 device includes the seventh indication information,

In another possible implementation, the UDM may obtain the SUPI of the AUN3 device in step 1060. The SUPI is a SUPI in a special format (for example, <5G_device_unique_identity>@ AUN3-5GC.mnc<MNC>.mcc<MCC>.3gppnetwork.org described above). That the UDM obtains the SUPI is equivalent to obtaining information about whether the AUN3 device supports the first key hierarchy and/or the 5G NAS. In this case, AUN3-5GC is sent to the AUSF as a part of the SUPI. Therefore, the seventh indication information may be the SUPI, or may be an AUN3-5GC field in the SUPI.

It should be understood that the foregoing several implementations are merely examples for describing how the UDM obtains whether the AUN3 device supports the first key hierarchy and/or the 5G NAS, and do not constitute any limitation on the protection scope of this application. The UDM may alternatively obtain, in another manner, the information about whether the AUN3 device supports the first key hierarchy and/or the 5G NAS. For example, whether the AUN3 device supports the first key hierarchy and/or the 5G NAS is determined based on a SUCI of the AUN3 device. For another example, historical communication data is obtained from a 5G-RG that was accessed by the AUN3 device, and whether the AUN3 device supports the first key hierarchy and/or the 5G NAS is determined based on the historical communication data. Details are not described herein.

Further, after the UDM obtains the information about whether the AUN3 device supports the first key hierarchy and/or the 5G NAS, the UDM may transmit the seventh indication information to the AUSF, so that the AUSF determines how to generate a key, that is, determines, based on whether the AUN3 device supports the first key hierarchy and/or the 5G NAS, how to generate a key. The method procedure shown in FIG. 10 further includes the following steps.

S1070: The UDM sends an obtaining response message to the AUSF, or in other words, the AUSF receives an obtaining response message from the UDM.

For ease of differentiation, the obtaining response message in this embodiment is denoted as an obtaining response message #1. The obtaining response message #1 includes information about the authentication vector and the optional seventh indication information, where the seventh indication information indicates whether the AUN3 device supports the first key hierarchy.

For example, a possible form of the seventh indication information includes but is not limited to a SUPI in a special format, a SUCI in a special format, character string information, or at least one piece of bit information. For specific descriptions, refer to the descriptions of the first indication information in the communication method shown in FIG. 9. Details are not described herein again.

Optionally, when the UDM receives the SUCI, the obtaining response message #1 carries the SUPI of the AUN3 device. If the SUPI of the AUN3 device may indicate whether the AUN3 device supports the first key hierarchy (for example, the SUPI is a SUPI in a special format), the seventh indication information may be understood as the SUPI of the AUN3 device, or a field indicating whether the first key hierarchy is supported in the SUPI.

Optionally, when the UDM determines whether the AUN3 device supports the 5G NAS, the obtaining response message #1 carries the eighth indication information, and the eighth indication information indicates whether the AUN3 device supports the 5G NAS.

S1080: The AUN3 device and the AUSF perform two-way authentication.

For details, refer to the descriptions of step S990 in FIG. 9. Details are not described herein again.

Further, in this embodiment, after receiving the obtaining response message #1, the AUSF may determine whether the AUN3 device supports the first key hierarchy.

The method procedure shown in FIG. 10 further includes the following steps.

S1090: The AUSF determines a key generation method, and generates a key.

For details, refer to the descriptions of step S991 in FIG. 9. Details are not described herein again. It should be additionally noted that when the seventh indication information needs to be sent, the AUSF determines, based on the seventh indication information in step S1010, whether the AUN3 device supports the first key hierarchy, and determines the key generation method. When the seventh indication information is optionally sent, the AUSF determines, based on whether the seventh indication information in step S1010 exists, whether the AUN3 device supports the first key hierarchy, and determines the key generation method.

S1091: The AUSF sends an authentication response message to the AMF, or in other words, the AMF receives an authentication response message from the AUSF.

For ease of differentiation, the authentication response message in this embodiment is denoted as an authentication response message #1. The authentication response message #1 carries ninth indication information, to indicate whether the AUN3 device supports the first key hierarchy.

Optionally, the ninth indication information and the seventh indication information are same information. For example, the AUSF forwards the received seventh indication information to the AMF.

Optionally, the ninth indication information and the seventh indication information are information having a same meaning but in different forms. For example, the 5G-RG processes the received seventh indication information to obtain the ninth indication information.

It should be understood that, regardless of whether a form of the ninth indication information is the same as a form of the seventh indication information, meanings expressed by the ninth indication information and the seventh indication information are the same. Therefore, the ninth indication information is not described again. For descriptions of the ninth indication information, refer to the descriptions of the seventh indication information.

For example, the authentication response message #1 further includes tenth indication information, and the tenth indication information indicates whether the AUN3 device supports a NAS protocol. For example, the AUSF receives the eighth indication information, and the AUSF learns, based on the eighth indication information, whether the AUN3 device supports the NAS protocol, so that the tenth indication information may be carried in the authentication response message #1. The tenth indication information and the eighth indication information have a same meaning, and may be in a same form or different forms.

S1092: The AMF determines whether the AUN3 device supports the first key hierarchy.

After receiving the authentication response message #1, the AMF may determine whether the AUN3 device supports the first key hierarchy.

For a specific determining manner, refer to the descriptions of step S940 in FIG. 9. Details are not described herein again. It should be additionally noted that when the ninth indication information needs to be sent, the AMF determines, based on the ninth indication information in step S1010, whether the AUN3 device supports the first key hierarchy, and determines the key generation method. When the ninth indication information is optionally sent, the AMF determines, based on whether the ninth indication information in step S1010 exists, whether the AUN3 device supports the first key hierarchy, and determines the key generation method.

In a possible implementation, the AMF determines, based on determining in step S1092, that the AUN3 device supports the first key hierarchy and the 5G NAS.

Optionally, in this implementation, if the AMF determines, by determining that the AUN3 device supports the 5G NAS, that the AUN3 device supports the first key hierarchy, the AMF may further generate a NAS key, and initiate a NAS SMC procedure with the AUN3 device based on the NAS key.

The method procedure shown in FIG. 10 may further include the following step.

S1094: Perform the NAS SMC procedure between the AMF and the AUN3 device.

In another possible implementation, the AMF determines, based on determining in step S1092, that the AUN3 device supports the first key hierarchy.

In this implementation, the AMF generates Kamf by using a third key and the SUPI of the AUN3 device, and further generates a key K5G-RG or Kwagf by using Kamf.

In still another possible implementation, the AMF determines, based on determining in step S1092, that the AUN3 device supports the first key hierarchy.

In this implementation, the AMF may not further generate a second key, and only needs to transmit the received third key to the 5G-RG.

The method procedure shown in FIG. 10 further includes the following steps.

S1093: The AMF determines the second key.

S1095: The AMF sends a fifth key to the 5G-RG, or in other words, the 5G-RG receives a fifth key from the AMF.

For details, refer to the descriptions of step S995 in FIG. 9. Details are not described herein again.

S1096: The 5G-RG establishes a secure connection to the AUN3 device.

For details, refer to the descriptions of step S996 in FIG. 9. Details are not described herein again.

In the embodiment shown in FIG. 10, the AMF and the AUSF may determine, based on indication information of the UDM, whether the AUN3 device supports the 5G NAS or the first key hierarchy, so that a subsequent core network element can determine whether the AUN3 device that currently requests access supports the first key hierarchy, and select a proper key derivation manner to generate a key, to improve communication security.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, an AUN3 device, a 5G-RG, an AMF, an AUSF, and UDM) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by a device (for example, the AUN3 device, the 5G-RG, the AMF, the AUSF, and the UDM) may alternatively be implemented by a component (for example, a chip or a circuit) of the device.

The communication methods provided in embodiments of this application are described in detail above with reference to FIG. 9 and FIG. 10. The foregoing communication methods are mainly described from a perspective of interaction between protocol layers of the terminal device. It may be understood that, to implement the foregoing functions, the terminal device includes corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

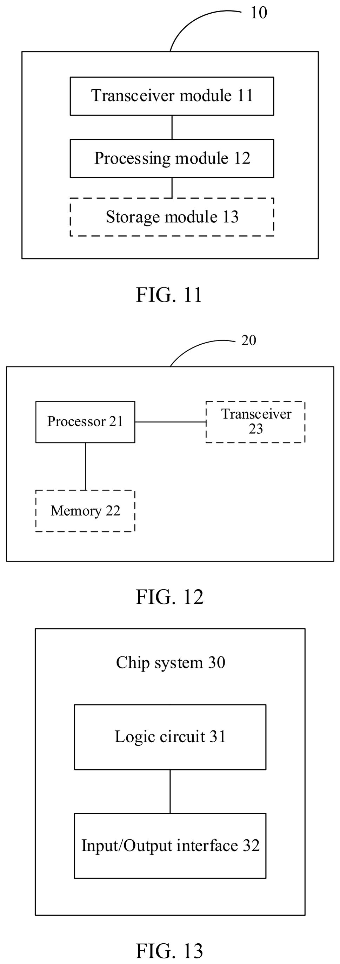

The following describes in detail communication apparatuses provided in this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmitter device or the receiver device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. The following provides descriptions by using an example in which each functional module is obtained through division based on each corresponding function.

FIG. 11 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the AUN3 device in the foregoing method embodiments, or a component (for example, a chip) of the AUN3 device.

The apparatus 10 may implement corresponding steps or procedures performed by the AUN3 device in the foregoing method embodiments. The transceiver module 11 may be configured to perform receiving and sending-related operations of the AUN3 device in the foregoing method embodiments. The processing module 12 may be configured to perform a processing-related operation of the AUN3 device in the foregoing method embodiments.

In a possible implementation, the transceiver module 11 is configured to receive a first request message from a first gateway, where the first request message is used to request identity information of a terminal device, the terminal device accesses a core network through a connection between the terminal device and the first gateway, and the identity information is used by the core network to perform identity authentication on the terminal device. The transceiver module 11 is configured to send a first response message to the first gateway, where the first response message includes the identity information, and the first response message indicates whether the terminal device supports a first key hierarchy. The transceiver module 11 is configured to receive, from the first gateway, a message indicating that the identity authentication succeeds. The processing module 12 is configured to generate a first key based on whether the terminal device supports the first key hierarchy, where the first key is used to perform security protection on the connection between the terminal device and the first gateway.

When the apparatus 10 is configured to perform the method in FIG. 9, the transceiver module 11 may be configured to perform steps of receiving and sending information in the method, for example, steps S910, S921, S920, S994, and S996; and the processing module 12 may be configured to perform a processing step in the method.

When the apparatus 10 is configured to perform the method in FIG. 10, the transceiver module 11 may be configured to perform steps of receiving and sending information in the method, for example, steps S1010, S1021, S1020, S1094, and S1096; and the processing module 12 may be configured to perform a processing step in the method.

It should be understood that a specific process in which the units perform the foregoing corresponding steps is described in detail in the foregoing method embodiments. For brevity, details are not described herein.

In another design, the apparatus 10 may correspond to the first gateway in the foregoing method embodiments, or a component (for example, a chip) of the first gateway.

The apparatus 10 may implement corresponding steps or procedures performed by the first gateway in the foregoing method embodiments. The transceiver module 11 may be configured to perform receiving and sending-related operations of the first gateway in the foregoing method embodiments. The processing module 12 may be configured to perform a processing-related operation of the first gateway in the foregoing method embodiments.

In a possible implementation, the transceiver module 11 is configured to send a first request message to a terminal device, where the first request message is used to request identity information of the terminal device, the terminal device accesses a core network through a connection between the terminal device and the first gateway, and the identity information is used by the core network to perform identity authentication on the terminal device. The transceiver module 11 is configured to receive a first response message from the terminal device, where the first response message includes the identity information, and the first response message indicates whether the terminal device supports a first key hierarchy. The transceiver module 11 is configured to send, to an access and mobility management network element, the identity information and indication information indicating whether the terminal device supports the first key hierarchy, where the access and mobility management network element is located in the core network. The transceiver module 11 is configured to send, to the terminal device, a message indicating that the identity authentication succeeds. The processing module 12 generates a first key based on a fifth key, where the first key is used to perform security protection on the connection between the terminal device and the first gateway.

When the apparatus 10 is configured to perform the method in FIG. 9, the transceiver module 11 may be configured to perform steps of receiving and sending information in the method, for example, steps S910, S921, S920, S930, S995, and S996; and the processing module 12 may be configured to perform a processing step in the method, for example, step S911.

When the apparatus 10 is configured to perform the method in FIG. 10, the transceiver module 11 may be configured to perform steps of receiving and sending information in the method, for example, steps S1010, S1021, S1020, S1030, S1095, and S1096; and the processing module 12 may be configured to perform a processing step in the method, for example, step S1011.

It should be understood that a specific process in which the units perform the foregoing corresponding steps is described in detail in the foregoing method embodiments. For brevity, details are not described herein.

In still another design, the apparatus 10 may correspond to the access and mobility management network element in the foregoing method embodiments, or a component (for example, a chip) of the access and mobility management network element.

The apparatus 10 may implement corresponding steps or procedures performed by the access and mobility management network element in the foregoing method embodiments. The transceiver module 11 may be configured to perform receiving and sending-related operations of the access and mobility management network element in the foregoing method embodiments. The processing module 12 may be configured to perform a processing-related operation of the access and mobility management network element in the foregoing method embodiments.

In a possible implementation, the transceiver module 11 is configured to receive, from a first gateway, identity information and indication information indicating whether a terminal device supports a first key hierarchy. The processing module 12 is configured to generate a fifth key based on whether the terminal device supports the first key hierarchy. The transceiver module 11 is configured to send the fifth key and a message indicating that identity authentication succeeds.

When the apparatus 10 is configured to perform the method in FIG. 9, the transceiver module 11 may be configured to perform steps of receiving and sending information in the method, for example, steps S930, S950, S992, and S994; and the processing module 12 may be configured to perform a processing step in the method, for example, steps S940 and S993.

When the apparatus 10 is configured to perform the method in FIG. 10, the transceiver module 11 may be configured to perform steps of receiving and sending information in the method, for example, steps S1091 and S1094; and the processing module 12 may be configured to perform a processing step in the method, for example, steps S1092 and S1093.

It should be understood that a specific process in which the units perform the foregoing corresponding steps is described in detail in the foregoing method embodiments. For brevity, details are not described herein.

In a design, the apparatus 10 may correspond to the data management network element in the foregoing method embodiments, or a component (for example, a chip) of the data management network element.

The apparatus 10 may implement corresponding steps or procedures performed by the data management network element in the foregoing method embodiments. The transceiver module 11 may be configured to perform receiving and sending-related operations of the data management network element in the foregoing method embodiments. The processing module 12 may be configured to perform a processing-related operation of the data management network element in the foregoing method embodiments.

In a possible implementation, the transceiver module 11 is configured to receive an obtaining request message from an authentication network element, where the obtaining request message is used to request to obtain an authentication vector needed for authentication, and the obtaining request message includes an identifier of an authenticable non-3rd generation partnership project AUN3 device. The transceiver module 11 is configured to send an obtaining response message to the authentication network element, where the obtaining response message includes information about the authentication vector and seventh indication information, the seventh indication information indicates whether the AUN3 device supports a first key hierarchy, and the information about the authentication vector and the seventh indication information are obtained based on the identifier of the AUN3 device.

When the apparatus 10 is configured to perform the method in FIG. 9, the transceiver module 11 may be configured to perform steps of receiving and sending information in the method, for example, steps S960 and S980; and the processing module 12 may be configured to perform a processing step in the method, for example, step S970.

When the apparatus 10 is configured to perform the method in FIG. 10, the transceiver module 11 may be configured to perform steps of receiving and sending information in the method, for example, steps S1050 and S1070; and the processing module 12 may be configured to perform a processing step in the method, for example, step S1060.

It should be understood that a specific process in which the units perform the foregoing corresponding steps is described in detail in the foregoing method embodiments. For brevity, details are not described herein.

In a design, the apparatus 10 may correspond to the authentication network element in the foregoing method embodiments, or a component (for example, a chip) of the authentication network element.

The apparatus 10 may implement corresponding steps or procedures performed by the authentication network element in the foregoing method embodiments. The transceiver module 11 may be configured to perform receiving and sending-related operations of the authentication network element in the foregoing method embodiments. The processing module 12 may be configured to perform a processing-related operation of the authentication network element in the foregoing method embodiments.

In a possible implementation, the transceiver module 11 is configured to receive an authentication request message from an access and mobility management network element, where the authentication request message is used to request the authentication network element to perform authentication on an authenticable non-3rd generation partnership project AUN3 device, and the authentication request message includes an identifier of the AUN3 device. The transceiver module 11 is configured to send an obtaining request message to a data management network element, where the obtaining request message is used to request to obtain an authentication vector needed for the authentication, and the obtaining request message includes the identifier of the AUN3 device. The transceiver module 11 is configured to receive an obtaining response message from the data management network element, where the obtaining response message includes information about the authentication vector and seventh indication information, and the seventh indication information indicates whether the AUN3 device supports a first key hierarchy. The processing module 12 is configured to generate a third key based on the identifier of the AUN3 device and whether the AUN3 device supports the first key hierarchy. The transceiver module 11 is configured to send an authentication response message to the access and mobility management network element, where the authentication response message includes the third key and ninth indication information, and the ninth indication information indicates whether the AUN3 device supports the first key hierarchy; and a corresponding manner of generating the third key when the AUN3 device supports the first key hierarchy is different from a corresponding manner of generating the third key when the AUN3 device does not support the first key hierarchy.

When the apparatus 10 is configured to perform the method in FIG. 9, the transceiver module 11 may be configured to perform steps of receiving and sending information in the method, for example, steps S950, S960, S980, and S992; and the processing module 12 may be configured to perform a processing step in the method, for example, step S991.

When the apparatus 10 is configured to perform the method in FIG. 10, the transceiver module 11 may be configured to perform steps of receiving and sending information in the method, for example, steps S1040, S1050, S1070, and S1091; and the processing module 12 may be configured to perform a processing step in the method, for example, step S1090.

It should be understood that a specific process in which the units perform the foregoing corresponding steps is described in detail in the foregoing method embodiments. For brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by devices (such as the AUN3 device, the 5G-RG, the AMF, the AUSF, and the UDM) in the foregoing methods. The function may be implemented by hardware, or may be implemented by hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may alternatively be a transceiver circuit (for example, the transceiver module may include a receiver circuit and a transmitter circuit), and the processing module may be a processing circuit.

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 12, the apparatus 20 further includes the memory 22, and the memory 22 is configured to store the computer program or the instructions and/or the data. The memory 22 and the processor 21 may be integrated or disposed separately. Optionally, there are one or more memories 22.

Optionally, as shown in FIG. 12, the apparatus 20 further includes a transceiver 23. The transceiver 23 is configured to receive and/or send a signal. For example, the processor 21 is configured to control the transceiver 23 to receive and/or send a signal.

In a solution, the apparatus 20 is configured to implement operations performed by the AUN3 device in the foregoing method embodiments.

In another solution, the apparatus 20 is configured to implement operations performed by the 5G-RG in the foregoing method embodiments.

In still another solution, the apparatus 20 is configured to implement operations performed by the AMF in the foregoing method embodiments.

In still another solution, the apparatus 20 is configured to implement operations performed by the AUSF in the foregoing method embodiments.

In still another solution, the apparatus 20 is configured to implement operations performed by the UDM in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) may be integrated into the processor.

It should be further noted that the memory described in this specification is intended to include but is not limited to these memories and any memory of another proper type.

FIG. 13 is a diagram of a chip system 30 according to an embodiment of this application. The chip system 30 (may also be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the AUN3 device, the 5G-RG, the AMF, the AUSF, or the UDM in the foregoing method embodiments.

For example, the logic circuit 31 is configured to implement processing-related operations performed by the AUN3 device, the 5G-RG, the AMF, the AUSF, or the UDM in the foregoing method embodiments. The input/output interface 32 is configured to implement sending and/or receiving-related operations performed by the AUN3 device, the 5G-RG, the AMF, the AUSF, or the UDM in the foregoing method embodiments.

An embodiment of this application further provides a computer-readable storage medium. The computer-readable storage medium stores computer instructions used to implement the method performed by the AUN3 device, the 5G-RG, the AMF, the AUSF, or the UDM in the foregoing method embodiments.

For example, when the computer program is executed by a computer, the computer is enabled to implement the method performed by the AUN3 device, the 5G-RG, the AMF, the AUSF, or the UDM in the foregoing method embodiments.

An embodiment of this application further provides a computer program product, including instructions. When the instructions are executed by a computer, the method performed by the AUN3 device, the 5G-RG, the AMF, the AUSF, or the UDM in the foregoing method embodiments is implemented.

An embodiment of this application further provides a communication system, including the AUN3 device, the 5G-RG, the AMF, the AUSF, and the UDM described above.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an authentication network element, an authentication request message from an access and mobility management network element, wherein the authentication request message is used to request the authentication network element to perform authentication on a terminal device;
sending, by the authentication network element, an obtaining request message to a data management network element, wherein the obtaining request message comprises an identifier of the terminal device, and the obtaining request message is used to request to obtain an authentication vector needed for the authentication;
receiving, by the authentication network element, an obtaining response message from the data management network element, wherein the obtaining response message comprises the authentication vector;
performing, by the authentication network element, the authentication on the terminal device based on the authentication vector; and
sending, by the authentication network element, an authentication response message to the access and mobility management network element, wherein the authentication response message indicates that the authentication succeeds, and the authentication response message comprises a key; and
when the terminal device does not support a first key hierarchy, the key is an MSK key, the obtaining response message further comprises seventh indication information indicating that the terminal device does not support the first key hierarchy, and the method further comprises:
in response to the seventh indication information, generating, by the authentication network element, the MSK key based on a key hierarchy other than the first key hierarchy.

2. The method according to claim 1, wherein
when the terminal device does not support the first key hierarchy, forgoing, by the authentication network element, generating a Kausf key.

3. The method according to claim 1 or 2, wherein when the terminal device supports the first key hierarchy, the key is a Kseaf key, and the method further comprises:
generating, by the authentication network element, the Kseaf key based on the first key hierarchy.

4. The method according to claim 3, wherein when the terminal device supports the first key hierarchy, the obtaining response message further comprises information indicating that the terminal device supports the first key hierarchy, and the generating, by the authentication network element, the Kseaf key based on the first key hierarchy comprises:
in response to the information indicating that the terminal device supports the first key hierarchy, generating, by the authentication network element, the Kseaf key based on the first key hierarchy.

5. The method according to claim 3 or 4, wherein the generating, by the authentication network element, the Kseaf key based on the first key hierarchy comprises:
generating, by the authentication network element, a Kausf key, and generating the Kseaf key based on the Kausf key.

6. A communication method, comprising:
receiving, by a data management network element, an obtaining request message from an authentication network element, wherein the obtaining request message comprises an identifier of a terminal device, and the obtaining request message is used to request to obtain an authentication vector needed for performing authentication on the terminal device; and
sending, by the data management network element, an obtaining response message to the authentication network element, wherein the obtaining response message comprises the authentication vector; and
when the terminal device does not support a first key hierarchy, the obtaining response message further comprises seventh indication information indicating that the terminal device does not support the first key hierarchy.

7. The method according to claim 6, wherein subscription data of the terminal device comprises indication information indicating whether the terminal device supports the first key hierarchy; and
that when the terminal device does not support the first key hierarchy, the obtaining response message further comprises the seventh indication information indicating that the terminal device does not support the first key hierarchy comprises:
when the indication information indicates that the terminal device does not support the first key hierarchy, the obtaining response message further comprises the seventh indication information indicating that the terminal device does not support the first key hierarchy.

8. The method according to claim 6 or 7, wherein when the terminal device supports the first key hierarchy, the obtaining response message further comprises information indicating that the terminal device supports the first key hierarchy, or the obtaining response message does not comprise information indicating whether the terminal device supports the first key hierarchy.

9. The method according to claim 8, wherein subscription data of the terminal device comprises indication information indicating whether the terminal device supports the first key hierarchy; and
that when the terminal device supports the first key hierarchy, the obtaining response message further comprises the information indicating that the terminal device supports the first key hierarchy, or the obtaining response message does not comprise the information indicating whether the terminal device supports the first key hierarchy comprises:
when the indication information indicates that the terminal device supports the first key hierarchy, the obtaining response message further comprises the information indicating that the terminal device supports the first key hierarchy, or the obtaining response message does not comprise the information indicating whether the terminal device supports the first key hierarchy.

10. A communication method, comprising:
sending, by an access and mobility management network element, an authentication request message to an authentication network element, wherein the authentication request message is used to request the authentication network element to perform authentication on a terminal device;
receiving, by the access and mobility management network element, an authentication response message from the authentication network element, wherein the authentication response message indicates that the authentication succeeds, and the authentication response message comprises a key; and
when the terminal device does not support a first key hierarchy, sending, by the access and mobility management network element, an MSK key to a first network element, wherein the key is the MSK key, and the MSK key is used to establish a secure connection between the terminal device and the first network element.

11. The method according to claim 10, wherein
when the terminal device does not support the first key hierarchy, forgoing, by the access and mobility management network element, generating a Kamf key.

12. The method according to claim 10 or 11, wherein when the terminal device supports the first key hierarchy, the key is a Kseaf key, and the method further comprises:
generating, by the access and mobility management network element, a second key based on the Kseaf key, and sending the second key to the first network element, wherein the second key is used to establish a secure connection between the terminal device and the first network element.

13. The method according to claim 12, wherein the authentication response message further comprises a subscription permanent identifier of the terminal device, and the generating, by the access and mobility management network element, the second key based on the Kseaf key comprises:
generating, by the access and mobility management network element, a Kamf key based on the Kseaf key and the subscription permanent identifier, and generating the second key based on the Kamf key.

14. A communication method, comprising:
sending, by an access and mobility management network element, an authentication request message to an authentication network element, wherein the authentication request message is used to request the authentication network element to perform authentication on a terminal device;
receiving, by the authentication network element, the authentication request message from the access and mobility management network element;
sending, by the authentication network element, an obtaining request message to a data management network element, wherein the obtaining request message comprises an identifier of the terminal device, and the obtaining request message is used to request to obtain an authentication vector needed for the authentication;
receiving, by the data management network element, the obtaining request message from the authentication network element;
sending, by the data management network element, an obtaining response message to the authentication network element, wherein the obtaining response message comprises the authentication vector;
receiving, by the authentication network element, the obtaining response message from the data management network element, and performing the authentication on the terminal device based on the authentication vector;
sending, by the authentication network element, an authentication response message to the access and mobility management network element, wherein the authentication response message indicates that the authentication succeeds, and the authentication response message comprises a key; and
receiving, by the access and mobility management network element, the authentication response message from the authentication network element, wherein
when the terminal device does not support a first key hierarchy, the key is an MSK key, the obtaining response message further comprises seventh indication information indicating that the terminal device does not support the first key hierarchy, and the method further comprises:
in response to the seventh indication information, generating, by the authentication network element, the MSK key based on a key hierarchy other than the first key hierarchy; and
sending, by the access and mobility management network element, the MSK key to a first network element, wherein the MSK key is used to establish a secure connection between the terminal device and the first network element.

15. The method according to claim 14, wherein subscription data of the terminal device comprises indication information indicating whether the terminal device supports the first key hierarchy; and
that when the terminal device does not support the first key hierarchy, the obtaining response message further comprises the seventh indication information indicating that the terminal device does not support the first key hierarchy comprises:
when the indication information indicates that the terminal device does not support the first key hierarchy, the obtaining response message further comprises the seventh indication information indicating that the terminal device does not support the first key hierarchy.

16. The method according to claim 14 or 15, wherein
when the terminal device does not support the first key hierarchy, forgoing, by the authentication network element, generating a Kausf key, and forgoing, by the access and mobility management network element, generating a Kamf key.

17. The method according to any one of claims 14 to 16, wherein when the terminal device supports the first key hierarchy, the key is a Kseaf key, and the method further comprises:
generating, by the authentication network element, the Kseaf key based on the first key hierarchy; and
generating, by the access and mobility management network element, a second key based on the Kseaf key, and sending the second key to the first network element, wherein the second key is used to establish a secure connection between the terminal device and the first network element.

18. The method according to claim 17, wherein the generating, by the authentication network element, the Kseaf key based on the first key hierarchy comprises:
generating, by the authentication network element, a Kausf key, and generating the Kseaf key based on the Kausf key.

19. The method according to claim 17 or 18, wherein the authentication response message further comprises a subscription permanent identifier of the terminal device, and the generating, by the access and mobility management network element, the second key based on the Kseaf key comprises:
generating, by the access and mobility management network element, a Kamf key based on the Kseaf key and the subscription permanent identifier, and generating the second key based on the Kamf key.

20. The method according to any one of claims 14 to 19, wherein when the terminal device supports the first key hierarchy, the obtaining response message further comprises information indicating that the terminal device supports the first key hierarchy, or the obtaining response message does not comprise information indicating whether the terminal device supports the first key hierarchy.

21. The method according to claim 20, wherein subscription data of the terminal device comprises indication information indicating whether the terminal device supports the first key hierarchy; and
that when the terminal device supports the first key hierarchy, the obtaining response message further comprises the information indicating that the terminal device supports the first key hierarchy, or the obtaining response message does not comprise the information indicating whether the terminal device supports the first key hierarchy comprises:
when the indication information indicates that the terminal device supports the first key hierarchy, the obtaining response message further comprises the information indicating that the terminal device supports the first key hierarchy, or the obtaining response message does not comprise the information indicating whether the terminal device supports the first key hierarchy.

22. The method according to claim 20 or 21, wherein when the obtaining response message further comprises the information indicating that the terminal device supports the first key hierarchy, the generating, by the authentication network element, the Kseaf key based on the first key hierarchy comprises:
in response to the information indicating that the terminal device supports the first key hierarchy, generating, by the authentication network element, the Kseaf key based on the first key hierarchy.

23. The method according to claim 12 or 13 or any one of claims 17 to 19, wherein the second key is a Kwagf key.

24. The method according to any one of claims 1 to 23, wherein the first key hierarchy is a 5th generation 5G key hierarchy.

25. The method according to any one of claims 1 to 24, wherein the terminal device is an authenticable non-3rd generation partnership project AUN3 device.

26. The method according to any one of claims 1 to 25, wherein the first gateway is a 5th generation residential gateway 5G-RG.

27. A communication system, comprising an authentication network element, a data management network element, and an access and mobility management network element, wherein
the authentication network element is configured to perform the method according to any one of claims 1 to 5;
the data management network element is configured to perform the method according to any one of claims 6 to 9; and
the access and mobility management network element is configured to perform the method according to any one of claims 10 to 13.

28. A communication method, comprising:
receiving a first request message from a first gateway, wherein the first request message is used to request identity information of a terminal device, the terminal device accesses a core network through a connection between the terminal device and the first gateway, and the identity information is used by the core network to perform identity authentication on the terminal device;
sending a first response message to the first gateway, wherein the first response message comprises the identity information, and the first response message indicates whether the terminal device supports a first key hierarchy;
receiving, from the first gateway, a message indicating that the identity authentication succeeds; and
generating a first key based on whether the terminal device supports the first key hierarchy, wherein the first key is used to perform security protection on the connection between the terminal device and the first gateway.

29. The method according to claim 28, wherein the generating the first key based on whether the terminal device supports the first key hierarchy comprises:
when the terminal device supports the first key hierarchy, generating the first key in a first key derivation manner; and
when the terminal device does not support the first key hierarchy, generating the first key in a second key derivation manner.

30. The method according to claim 28 or 29, wherein that the first response message indicates whether the terminal device supports the first key hierarchy comprises:
the identity information indicates whether the terminal device supports the first key hierarchy.

31. The method according to claim 30, wherein that the identity information indicates whether the terminal device supports the first key hierarchy comprises:
when the identity information is a first identifier, the identity information indicates that the terminal device does not support the first key hierarchy; or
when the identity information is a second identifier, the identity information indicates that the terminal device supports the first key hierarchy.

32. The method according to claim 30, wherein that the identity information indicates whether the terminal device supports the first key hierarchy comprises:
when the identity information is a first type of a first identifier, the identity information indicates that the terminal device does not support the first key hierarchy; or
when the identity information is a second type of a first identifier, the identity information indicates that the terminal device supports the first key hierarchy.

33. The method according to claim 30, wherein that the identity information indicates whether the terminal device supports the first key hierarchy comprises:
the identity information comprises a field indicating whether the terminal device supports the first key hierarchy.

34. The method according to claim 28 or 29, wherein the first response message further comprises first indication information; and
that the first response message indicates whether the terminal device supports the first key hierarchy comprises:
the first indication information indicates whether the terminal device supports the first key hierarchy.

35. The method according to claim 34, wherein the first indication information comprises at least one of the following: character string information, bit information, or a non-access stratum protocol data unit.

36. The method according to any one of claims 28 to 35, wherein before the receiving, from the first gateway, the message indicating that the identity authentication succeeds, the method further comprises:
determining a serving network name, wherein the serving network name is used for the identity authentication, and the serving network name comprises at least one of the following: a preset fixed value, a home public land mobile network identifier PLMN ID of the terminal device, or a PLMN ID of an access and mobility management network element that serves the first gateway.

37. The method according to any one of claims 28 to 36, wherein before the receiving the first request message from the first gateway, the method further comprises:
determining an access manner for accessing the first gateway, wherein the access manner comprises trusted non-3rd generation partnership project 3GPP access or untrusted non-3GPP access.

38. The method according to any one of claims 28 to 37, wherein the first gateway comprises a 5th generation residential gateway 5G-RG, and the first key hierarchy comprises a 5G key hierarchy.

39. A communication method, comprising:
sending a first request message to a terminal device, wherein the first request message is used to request identity information of the terminal device, the terminal device accesses a core network through a connection between the terminal device and a first gateway, and the identity information is used by the core network to perform identity authentication on the terminal device;
receiving a first response message from the terminal device, wherein the first response message comprises the identity information, and the first response message indicates whether the terminal device supports a first key hierarchy;
sending, to an access and mobility management network element, the identity information and indication information indicating whether the terminal device supports the first key hierarchy, wherein the access and mobility management network element is located in the core network;
receiving, from the access and mobility management network element, a fifth key and a message indicating that the identity authentication succeeds, wherein the fifth key is generated based on whether the terminal device supports the first key hierarchy;
sending, to the terminal device, the message indicating that the identity authentication succeeds; and
generating a first key based on the fifth key, wherein the first key is used to perform security protection on the connection between the terminal device and the first gateway.

40. The method according to claim 39, wherein that the fifth key is generated based on whether the terminal device supports the first key hierarchy comprises:
when the terminal device supports the first key hierarchy, the fifth key is generated in a first key derivation manner; and
when the terminal device does not support the first key hierarchy, the fifth key is generated in a second key derivation manner.

41. The method according to claim 39 or 40, wherein the sending, to the access and mobility management network element, the identity information and the indication information indicating whether the terminal device supports the first key hierarchy comprises:
sending, to the access and mobility management network element by using a non-access stratum NAS registration request message, the identity information and the indication information indicating whether the terminal device supports the first key hierarchy, wherein
the first response message comprises the NAS registration request message, or the NAS registration request message is generated by the first gateway based on the first response message.

42. The method according to claim 41, wherein the method further comprises:
sending, by the first gateway to the access and mobility management network element, indication information indicating a device initiating a registration request to access the core network through a connection between the device and the first gateway.

43. The method according to any one of claims 39 to 42, wherein that the first response message indicates whether the terminal device supports the first key hierarchy comprises:
the identity information indicates whether the terminal device supports the first key hierarchy.

44. The method according to any one of claims 39 to 42, wherein the first response message further comprises first indication information; and
that the first response message indicates whether the terminal device supports the first key hierarchy comprises:
the first indication information indicates whether the terminal device supports the first key hierarchy.

45. The method according to any one of claims 39 to 44, wherein the first gateway comprises a 5th generation residential gateway 5G-RG, and the first key hierarchy comprises a 5G key hierarchy.

46. A communication method, comprising:
sending, by a first gateway, a first request message to a terminal device, wherein the first request message is used to request identity information of the terminal device, the terminal device accesses a core network through a connection between the terminal device and the first gateway, and the identity information is used by the core network to perform identity authentication on the terminal device;
sending, by the terminal device, a first response message to the first gateway, wherein the first response message comprises the identity information, and the first response message indicates whether the terminal device supports a first key hierarchy;
obtaining, by the first network element, a fifth key and a message indicating that the identity authentication succeeds, wherein the fifth key is generated based on whether the terminal device supports the first key hierarchy;
sending, by the first gateway to the terminal device, the message indicating that the identity authentication succeeds;
generating, by the terminal device, a first key based on whether the terminal device supports the first key hierarchy, wherein the first key is used to perform security protection on the connection between the terminal device and the first gateway; and
generating, by the first gateway, the first key based on the fifth key.

47. The method according to claim 46, wherein the method further comprises:
receiving, by an access and mobility management network element from the first gateway, the identity information and indication information indicating whether the terminal device supports the first key hierarchy;
generating, by the access and mobility management network element, the fifth key based on whether the terminal device supports the first key hierarchy; and
sending, by the access and mobility management network, the fifth key to the first gateway.

48. A communication system, comprising a terminal device and a first gateway, wherein
the first gateway is configured to send a first request message to the terminal device, wherein the first request message is used to request identity information of the terminal device, the terminal device accesses a core network through a connection between the terminal device and the first gateway, and the identity information is used by the core network to perform identity authentication on the terminal device;
the terminal device is configured to send a first response message to the first gateway, wherein the first response message comprises the identity information, and the first response message indicates whether the terminal device supports a first key hierarchy;
the first network element is further configured to obtain a fifth key and a message indicating that the identity authentication succeeds, wherein the fifth key is generated based on whether the terminal device supports the first key hierarchy;
the first gateway is further configured to send, to the terminal device, the message indicating that the identity authentication succeeds;
the terminal device is further configured to generate a first key based on whether the terminal device supports the first key hierarchy, wherein the first key is used to perform security protection on the connection between the terminal device and the first gateway; and
the first gateway is further configured to generate the first key based on the fifth key.

49. The system according to claim 48, wherein the system further comprises an access and mobility management network element, wherein
the access and mobility management network element is configured to receive, from the first gateway, the identity information and indication information indicating whether the terminal device supports the first key hierarchy;
the access and mobility management network element is further configured to generate the fifth key based on whether the terminal device supports the first key hierarchy; and
the access and mobility management network element is further configured to send the fifth key to the first gateway.

50. A communication apparatus, wherein the apparatus comprises a unit configured to perform the method according to any one of claims 1 to 13 or any one of claims 28 to 45.

51. A communication apparatus, comprising:
a memory, configured to store a computer program; and
a processor, configured to execute the computer program stored in the memory, so that the communication apparatus performs the method according to any one of claims 1 to 13 or any one of claims 28 to 45.

52. A computer-readable storage medium, wherein the computer-readable storage medium stores computer instructions, and when the computer instructions are run on a computer, the computer performs the method according to any one of claims 1 to 13 or any one of claims 28 to 45.

53. A computer program product, wherein the computer program product comprises computer instructions, and when the computer instructions are run on a computer, instructions used to perform the steps performed by the storage function network element in the method according to any one of claims 1 to 13 or any one of claims 28 to 45 are executed.
